Europäisches Patentamt

(19) European Patent Office

Office européen des brevets

(11) Numéro de publication: **0 041 902**
**B1**

(12) **FASCICULE DE BREVET EUROPEEN**

(45) Date de publication du fascicule du brevet:
**02.04.86**

(21) Numéro de dépôt: **81400921.3**

(22) Date de dépôt: **10.06.81**

(51) Int. Cl.⁴: **H 04 M 3/56**, H 04 N 7/14

(54) Procédé et dispositif pour établir des communications bidirectionnelles et/ou multidirectionnelles entre différentes personnes regroupées en différentes stations géographiquement éloignées et reliées entre elles par des lignes téléphoniques.

(30) Priorité: **11.06.80 FR 8013003**

(43) Date de publication de la demande:
**16.12.81 Bulletin 81/50**

(45) Mention de la délivrance du brevet:
**02.04.86 Bulletin 86/14**

(84) Etats contractants désignés:
**CH DE GB IT LI NL SE**

(56) Documents cités:
**FR - A - 2 390 864**

**SYSTEMS TECHNOLOGY, no. 24, juin 1976 LIVERPOOL (GB) R. TRUEMAN:** *"A communication system for remote conference"* **pages 17-21**
**ELECTRO CONFERENCE RECORD, vol. 4, avril 1979 HOLMDEL, NEW JERSEY C. STOCKBRIDGE:** *"The evolution of a multimode multilocation audioconferencing system"* **pages 29/3-1 à 29/3-11**

(73) Titulaire: **Faye, André, 14-16, rue du Faubourg St-Honoré, F-75008 Paris (FR)**

(72) Inventeur: **Faye, André, 14-16, rue du Faubourg St-Honoré, F-75008 Paris (FR)**

(74) Mandataire: **Weinstein, Zinovi et al, Cabinet Z. WEINSTEIN 20, Avenue de Friedland, F-75008 Paris (FR)**

## Description

L'invention concerne généralement les techniques de communication pour échanger des informations entre différentes personnes, et a plus particulièrement pour objet un procédé et un dispositif pour établir des communications bidirectionnelles et/ou multidirectionnelles entre différentes personnes regroupées en différentes stations géographiquement éloignées et reliées entre elles par des lignes téléphoniques telles que des liaisons spécialisées, pour permettre notamment la mise en place et la réalisation de conférences à distance.

Dès qu'une personne prononce le mot de «conférence», il va sans dire que les différents participants à cette conférence seront regroupés en un même lieu géographique.

Cependant, grâce à l'évolution constante des techniques de communication, il existe des systèmes de conférence à distance entre plusieurs personnes reliées par des liaisons spécialisées.

La demande de brevet français n° 2 390 864 révèle un système d'audioconférence par liaison téléphonique entre au moins deux groupes de locuteurs distants chaque groupe prenant place autour d'une table de conférence comportant centralement une enceinte acoustique et des microphones équirépartis autour de l'enceinte acoustique et étant associée à une partie émission et une partie réception des signaux transmis par la liaison téléphonique, le système comprenant également un tableau d'affichage à voyants d'identification des locuteurs des locaux distants.

Cependant, un tel système connu nécessite de recourir à une ligne téléphonique du type à deux paires de fils symétriques, l'une étant affectée à la voie de transmission tandis que l'autre est affectée à la voie de réception. Une telle ligne téléphonique a pour inconvénient de limiter les zones géographiques des participants à la conférence et donc de limiter le nombre de participants.

De plus, l'identification de chaque intervenant par le système connu résulte d'une procédure préalable longue et compliquée et qui consiste à se concerter entre les participants éloignés pour convenir de la concordance des voyants des tableaux d'affichage avec les noms des participants.

L'invention a pour but de pallier notamment aux inconvénients ci-dessus et propose des solutions simples garantissant toute fiabilité et cohérence dans les échanges d'informations.

Dans les solutions envisagées par l'invention, il n'y a pas de limitation de participants à une même conférence, tout en permettant la transmission de messages simultanément à la transmission des signaux de la parole grâce à une technique appropriée de multiplexage spatial.

L'invention propose donc un procédé pour établir des communications bidirectionnelles et/ou multidirectionnelles par exemple du type téléphonique et/ou pour échanger des informations par exemple sous forme de données ou de messages téléphoniques entre différentes personnes regroupées en différentes stations géographiquement éloignées et reliées entre elles par des lignes téléphoniques, chaque station comprenant au moins une unité d'émission équipée d'au moins un micro, une unité de réception équipée d'au moins un haut-parleur, et une unité d'affichage, le procédé consistant, pour mettre en place une conférence entre différentes stations et à l'instigation de l'une de ces personnes, à faire émettre par l'instigateur de la conférence et à partir de l'unité d'émission de sa station ou station de source, un signal d'appel vers les stations où se trouvent les personnes invitées à participer à la conférence, à matérialiser ce signal d'appel à chacune des stations recevant ce signal, à faire répondre chaque station ayant reçu un signal d'appel, par l'émission d'un signal de réponse envoyé à la station pour faire partie de la conférence et à indentifier le nom de la personne qui parle pendant la conférence sur l'unité d'affichage de chaque station participant à la conférence, caractérisé en ce qu'il consiste:

– à mettre en circuit l'unité d'émission de chaque station appelée à condition que: la station ait reçu un signal d'appel ou de validation; l'unité d'émission ait été personnalisée par une personne de la station et munie d'un support d'information individuel tel qu'un badge portant au moins des informations codées propres à cette personne et notamment son nom, cette personnalisation étant effectuée par l'introduction de ce badge dans un dispositif de lecture de l'unité d'émission de la station; et qu'aucune autre personne, déjà entrée dans la conférence, ne parle;

– à identifier le nom du locuteur sur l'unité d'affichage de chaque station entré dans la conférence, dès que le locuteur prend la parole, cette identification s'effectuant par le transfert automatique du nom codé du locuteur enregistré sur son badge préalablement introduit dans le lecteur de son unité d'émission, et en ce qu'il consiste, à tout moment, à n'avoir qu'un seul micro mis en circuit, cette mise en circuit étant automatique dès que les premiers mots prononcés par une personne ou locuteur présentent une intensité sonore qui dépasse un seuil prédéterminé, les autres micros étant alors automatiquement mis hors circuit.

Selon une autre caractéristique du procédé conforme à l'invention, il est possible de faire envoyer à tout moment, au cours du déroulement de la conférence et par une station participant à cette conférence, un signal codé de demande d'intervention d'une personne de cette station, à visualiser cette demande d'intervention sur l'unité d'affichage des autres stations participant à la conférence, et à donner la parole à cette personne sur ordre de l'instigateur de la conférence par exemple, ce signal codé identifiant le nom de cette personne.

Selon une autre caractéristique du procédé conforme à l'invention, il est possible, à tout moment au cours du déroulement de la conférence, de faire envoyer par une station non invitée à la conférence, un signal codé de demande d'intervention d'une personne de cette station, de visualiser cette demande d'intervention sur l'unité d'affichage des stations participant à la conférence, et d'inviter ladite personne à participer à la conférence uniquement sur ordre de l'instigateur de la conférence, le micro de la station demanderesse étant mis hors circuit tant que la station n'a pas reçu un signal de validation permettant de mettre en circuit le micro, et ce pour éviter toute entrée intempestive de personnes dans le réseau pouvant perturber la conférence.

Selon une autre caractéristique du procédé conforme à l'invention, les différentes stations susceptibles de participer à une conférence sont reliées par des liaisons spécialisées, en formant notamment un réseau en étoile comprenant une station centrale reliée aux autres stations par une liaison spécialisée, deux stations pouvant être reliées ensemble par une ligne téléphonique du réseau commuté.

Selon encore une autre caractéristique du procédé conforme à l'invention, il est possible de transmettre éventuellement simultanément en utilisant un multiplexage spatial approprié:
— les signaux codés de l'intervention du locuteur,
— les signaux d'appel précités et/ou les signaux de réponse précités et/ou les signaux de demande d'intervention précités, et
— des signaux de données,
en divisant en différents canaux la bande passante 300 à 3000 Hz de chaque liaison spécialisée entre deux stations:
— en un premier canal allant environ de 300 à 2000 Hz réservé à la parole,
— en un second canal allant environ de 2000 à 2500 Hz réservé à la transmission de données à 300 bauds, et
— en des canaux supplémentaires, par exemple au nombre de quatre, allant environ de 2500 à 3000 Hz réservés à la signalisation constitués par les signaux d'appel, les signaux de réponse et/ou les signaux de demande d'intervention.

Selon une autre caractéristique du procédé conforme à l'invention, il est possible, simultanément ou non à la transmission des paroles d'un locuteur d'une station vers l'une ou plusieurs stations participant à une conférence, de faire envoyer par une station participant ou non à cette conférence des données par l'intermédiaire du second canal précité en direction d'au moins une station participant ou non à la conférence, ces données étant enregistrées à la station réceptrice sur un support magnétique.

Selon une autre caractéristique du procédé conforme à l'invention, l'ensemble des stations constituant un réseau de communication sont matérialisées à chaque station par un tableau synoptique reproduisant schématiquement les limites géographiques du réseau et situant la localisation des différentes stations de ce réseau, chaque localisation étant matérialisée par exemple par deux diodes électroluminescentes de couleur différente et allumées de façon clignotante ou fixe en fonction de l'état de chaque station au cours de la conférence, et permettre ainsi à toute personne d'une station de prendre connaissance rapidement et d'un seul coup d'œil des stations concernées par une conférence, de l'état de chaque station dans la conférence, et des demandes d'intervention éventuelles de stations faisant partie du réseau et demandant à entrer dans la conférence.

Selon une autre caractéristique du procédé conforme à l'invention, une personne non présente dans une station d'un réseau peut, grâce notamment à une unité d'émission portative, se raccorder à une station du réseau par une ligne téléphonique du réseau commuté, pour participer à une conférence éventuellement mise en place à son instigation entre plusieurs stations de ce réseau.

L'invention a également pour objet un dispositif pour établir des communications bidirectionnelles et/ou multidirectionnelles par exemple du type téléphonique et/ou pour échanger des informations par exemple sous forme de données ou de messages téléphoniques selon le procédé de l'invention, caractérisé en ce qu'il comprend un poste téléphonique notamment classique qui comporte au moins un clavier alpha-numérique, une unité d'affichage et un ensemble de circuits de traitement constitué essentiellement par un microprocesseur comprenant une unité centrale, un ensemble mémoire dans lequel sont enregistrées des informations personnalisées constituant un répertoire, une mémoire morte programmable comprenant au moins un programme enregistré permettant d'assurer les différentes séquences automatiques de recherche et de lancement d'un appel téléphonique, et un circuit interface monté entre ledit micro-processeur, le clavier alpha-numérique et l'unité d'affichage ainsi qu'un circuit de commutation relié au poste téléphonique et à la ligne téléphonique et en ce qu'il comprend de plus un second ensemble mémoire pour enregistrer l'information personnalisée précitée d'un correspondant retrouvé dans le répertoire précité, mais dont la séquence d'appel s'est traduite par un signal d'occupation de la ligne, en vue d'effectuer à nouveau et automatiquement, après une temporisation, au moins une tentative de joindre ce correspondant.

Un autre objet de l'invention est un dispositif pour établir des communications bidirectionnelles et/ou multidirectionnelles par exemple du type téléphonique et/ou pour échanger des informations par exemple sous forme de données ou de messages téléphoniques, entre différentes personnes regroupées en différentes stations géographiquement éloignées et reliées entre elles par des lignes téléphoniques, chaque station d'un réseau comprenant un appareillage comprenant au moins une unité d'émission équipée d'un micro, une unité de réception équipée d'un haut-parleur et une unité d'affichage à diodes électroluminescentes, caractérisé en ce que chaque station comprend également une unité formant lecteur d'un support d'information individuel tel qu'un badge sur lequel est enregistré le nom de la personne possédant le badge pour aller inscrire le nom de cette personne sur l'unité d'affichage de chaque station entrée dans la conférence lorsqu'elle intervient, et une unité interface reliant ces différentes unités à une ligne téléphonique, cet appareillage étant situé à chaque station d'un réseau de communication comprenant plusieurs stations reliées entre elles par des lignes téléphoniques et notamment par des liaisons spécialisées.

Selon une autre caractéristique du dispositif, l'appareillage situé à une station peut comprendre également un tableau synoptique reproduisant schématiquement les limites géographiques d'un réseau regroupant plusieurs stations de ce réseau, chaque station étant matérialisée par des moyens susceptibles d'émettre de la lumière tels que des diodes électroluminescentes dont l'état lumineux indique, à tout moment, l'état de cette station au cours d'une conférence, ces moyens étant commandés automatiquement et/ou manuellement suivant l'évolution de la conférence.

Selon une autre caractéristique du dispositif, l'appareillage d'une station peut comprendre également un tableau d'affichage à plusieurs colonnes pour visualiser, à raison d'une ligne par station:

— le nom de chaque station invitée à entrer dans une conférence,

— le nom de la ou des personnes de cette station invitées à participer à cette conférence,

— une information indiquant que la station appelée a répondu à l'invitation d'entrer dans la conférence, et

— une information, par exemple sous forme numérique, pour indiquer, le numéro dans la file d'attente d'une demande d'intervention émanant d'une personne de cette station.

Selon une autre caractéristique du dispositif, une personne non présente dans une station d'un réseau de communication peut posséder un appareillage spécial susceptible d'être raccordé, par une ligne téléphonique du réseau commuté, à une station d'un réseau, cet appareillage spécial étant constitué d'au moins une unité d'émission, une unité de réception, un lecteur de badge, et un circuit interface sur lequel vient se raccorder le combiné d'un poste téléphonique classique par exemple.

Ainsi, selon l'invention, il est possible de mettre en place des conférences en permettant l'utilisation simultanée de moyens d'expression complémentaires de communication pour assurer:

— une conversation téléphonique,

— la transmission de messages,

— l'identification des locuteurs par l'intermédiaire des badges,

— la matérialisation sur un tableau synoptique de l'ensemble d'un réseau, de l'état instantané de chaque station constituant le réseau et de l'évolution de cet état au cours d'une conférence, et

— la transmission de données.

Selon un autre avantage de l'invention, le nombre des participants à une conférence n'est pas limitatif, ces personnes pouvant être situées au sein d'une même station dans les locaux différents, chaque local étant équipé d'un appareillage conforme à l'invention et relié en local aux autres appareillages de la station.

Selon encore un autre avantage de l'invention, les demandes d'intervention au cours d'une conférence sont visualisées à chaque station du réseau, ce qui permet d'assurer un meilleur déroulement de la conférence.

D'autres avantages, caractéristiques et détails apparaîtront plus clairement à l'aide de la description explicative qui va suivre faite en référence aux dessins annexés donnés uniquement à titre d'exemple et dans lesquels:

La fig. 1 représente schématiquement plusieurs configurations possibles de réseaux de communication entre plusieurs stations pour illustrer différentes applications possibles de l'invention.

La fig. 2 représente en perspective une unité de communication équipant une station d'un réseau.

La fig. 3 représente sous forme de schéma-bloc les principaux circuits de l'unité de communication de la fig. 2.

La fig. 4 représente en perspective une variante plus élaborée d'une unité de communication équipant une station d'un réseau; et

La fig. 5 représente sous forme de schéma-bloc les principaux circuits de l'unité de communication de la fig. 4.

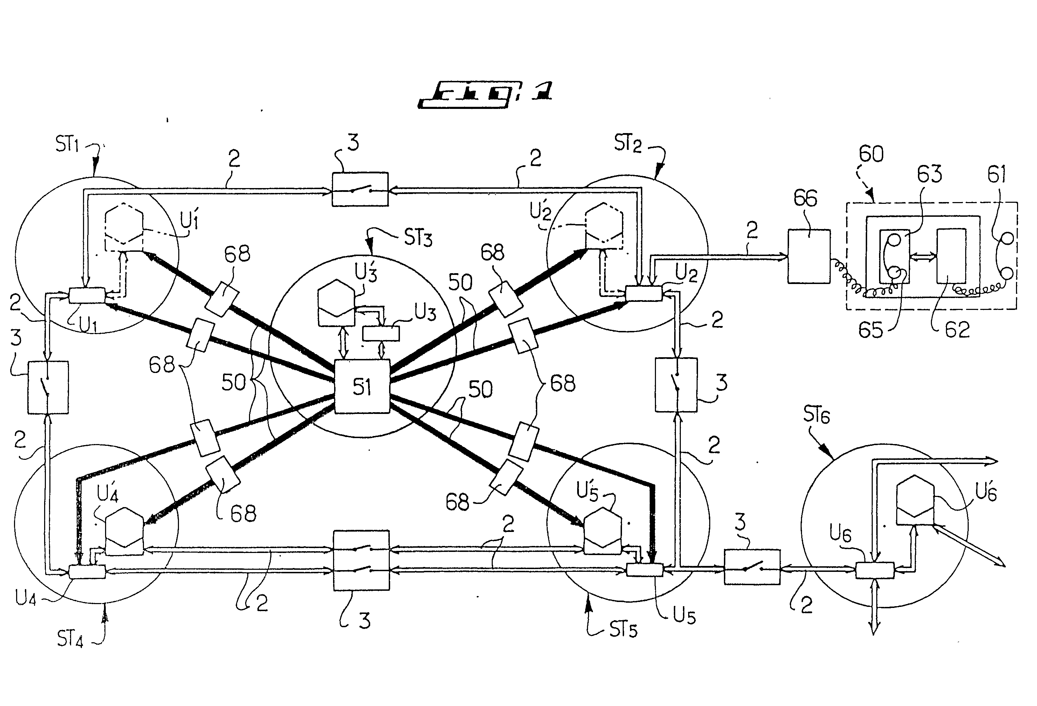

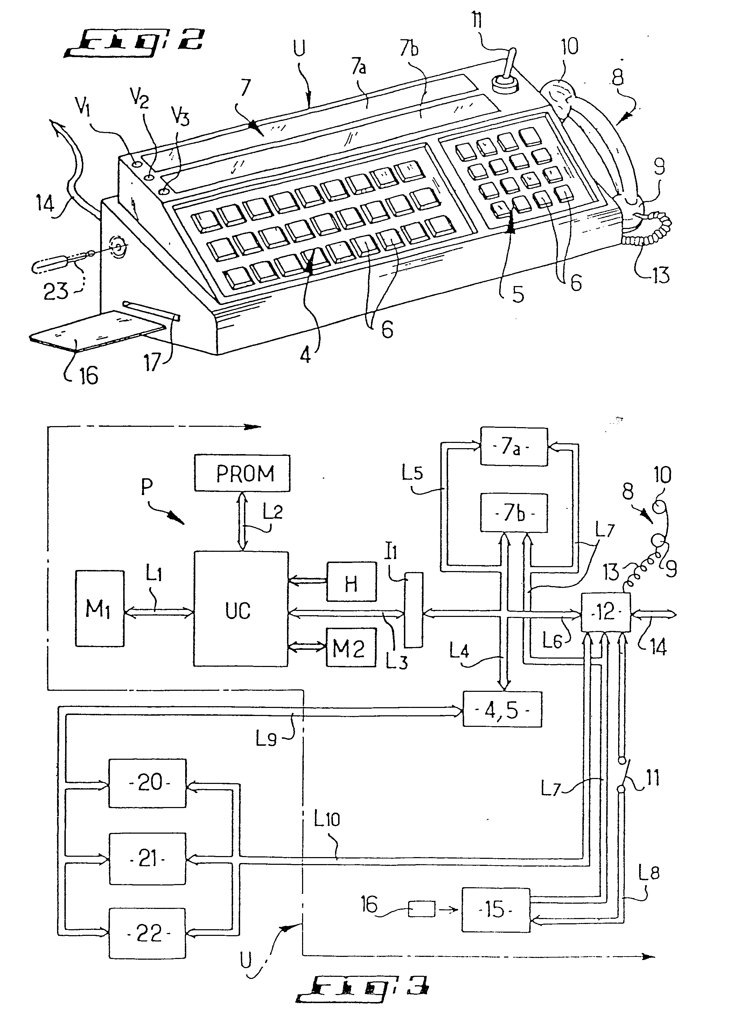

En se reportant à la fig. 1, un réseau de communication regroupe au moins deux stations ST1, ST2 reliées entre elles par une ligne téléphonique 2 du réseau commuté et un auto-commutateur 3. L'équipement d'une station ST1, ST2 comprend au moins une unité de communication U telle que celle représentée sur la fig. 2, cette même unité de communication étant référencée U1 pour la station ST1 et U2 pour la station ST2.

L'unité de communication U de la fig. 2 comprend:

— un clavier alpha-numérique 4 et un clavier numérique 5 constitués par des boutons-poussoirs 6 par exemple,

— une unité d'affichage 7 par exemple à diodes électroluminescentes et constituée par exemple de deux lignes d'affichage 7a et 7b,

— un combiné téléphonique classique 8 équipé d'une capsule émission 9 et d'une capsule réception 10,

— un commutateur 11 à deux positions, et

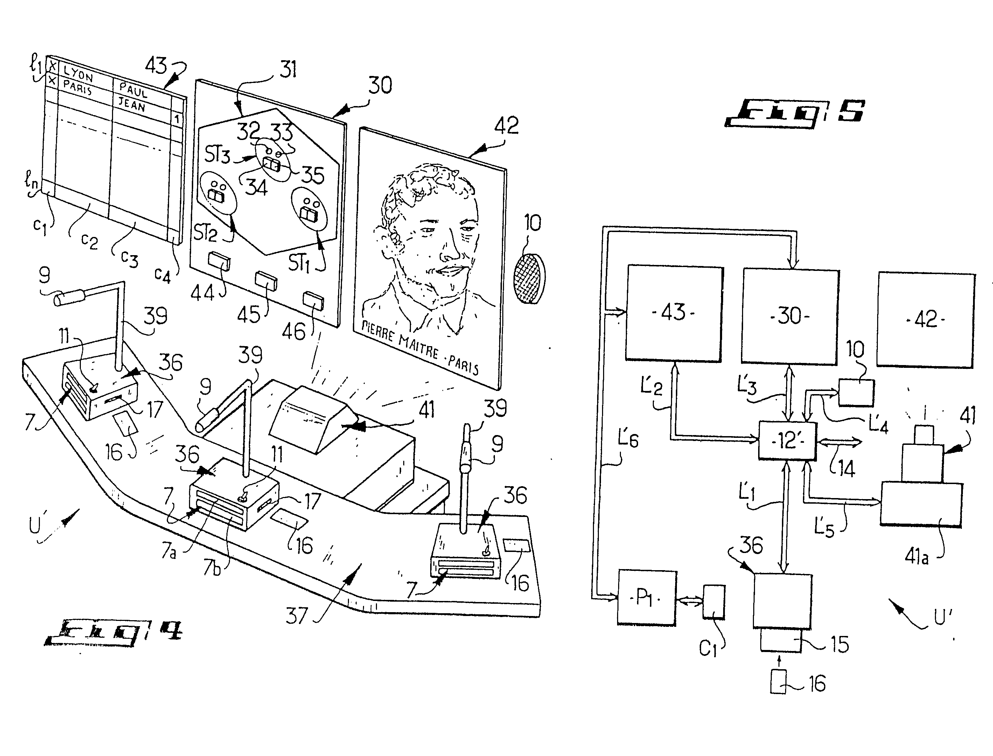

— un ensemble de circuits de commande schématisés sur la fig. 3.

Ces circuits de commande ou de traitement comprennent essentiellement un micro-processeur P avec une unité centrale UC, un premier ensemble mémoire ou mémoire répertoire M1 reliée à l'unité centrale UC par des liaisons bidirectionnelles L1, et une mémoire morte programmable PROM reliée à l'unité centrale UC par des liaisons bidirectionnelles L2. L'unité centrale UC est reliée, par des liaisons bidirectionnelles L3, à une unité interface I1 qui est elle-même reliée:

— aux deux claviers alpha-numérique 4 et numérique 5 par des liaisons bidirectionnelles L4,

— aux deux lignes d'affichage 7a, 7b par des liaisons bidirectionnelles L5, et

— à un circuit de commande et de commutation 12 par des liaisons bidirectionnelles L6, ce circuit 12 étant lui-même relié au combiné 8 par un conducteur 13 et en sortie à une ligne téléphonique 14.

L'unité de communication U comprend également une unité formant lecteur 15 d'un support d'enregistrement 16 tel qu'un badge qui, pour sa lecture, est introduit dans une fente 17 de l'unité U (fig. 2).

Sur ce badge 16 sont enregistrées, de façon magnétique par exemple, des informations codées personnalisant une personne et notamment le nom de la personne à laquelle est attribué ce badge. Ce lecteur 15 est relié par des liaisons unidirectionnelles L7 aux lignes d'affichage 7a, 7b et à la ligne téléphonique 14 par l'intermédiaire du circuit de commutation et de commande 12.

Le commutateur 11 schématisé sur la fig. 3 par un simple interrupteur, est relié par des liaisons bidirectionnelles L8 au lecteur 15 et au dispositif de commutation et de commande 12, afin de pouvoir commander automatiquement le transfert du nom de la personne enregistrée sur son badge 16 vers la ligne téléphonique 14, lorsque cette personne effectue une demande d'intervention.

Comme cela ressort également de la fig. 3, l'unité de communication U peut être avantageusement reliée, par des liaisons bidirectionnelles L9, à une unité d'enregistrement 20, une unité imprimante 21, et à une unité informatique 22 pour permettre des opérations supplémentaires. L'unité d'enregistrement 20 permet notamment d'enregistrer sur un support magnétique des messages transmis à l'unité de communication U avec impression simultanée ou non sur l'unité d'imprimante 21, alors que l'unité informatique 22 peut permettre la consultation de fichiers éventuellement au cours d'une conférence. Ces unités auxiliaires 20, 21, 22 sont reliées d'une part au circuit de commande et de commutation 12 assurant la liaison avec la ligne téléphonique 14 et d'autre part, avec les claviers 4, 5 par exemple pour commander ces unités auxiliaires, par des liaisons L9.

En se reportant à nouveau à la fig. 2, une unité de communication U comprend également trois voyants V1, V2, V3 situés à proximité de l'unité d'affichage 7 et dont les fonctions seront explicitées plus loin. Ces voyants sont notamment chargés d'indiquer la situation dans laquelle se trouve la ligne téléphonique 14 reliant l'unité de communication U à au moins une autre unité de communication d'une autre station. Une clé de sécurité 23 peut être enfichée dans l'unité de communication U pour permettre par exemple à cette unité de se déconnecter du réseau et permettre ainsi des opérations en local.

Avant de décrire les autres figures, il est important de préciser que les différentes stations de communication regroupées au sein d'une même entité dénommée «réseau» sont en fait situées en des lieux géographiques différents d'un même pays ou d'une même région de ce pays. Aussi, il est intéressant et avantageux, selon une caractéristique de l'invention, de matérialiser ce réseau dans chaque station du réseau ou tout au moins dans les stations principales de ce réseau par l'intermédiaire d'un tableau synoptique reproduisant schématiquement les limites géographiques du réseau et indiquant la localisation des différentes stations de ce réseau.

Une telle matérialisation d'un réseau est envisagée dans l'unité de communication perfectionnée décrite sur les figs 4 et 5, une telle unité pouvant venir en complément de l'unité de communication décrite sur les figs 2 et 3.

Ce tableau synoptique 30 représenté sur la fig. 4 est disposé dans le local d'une station. Sur ce synoptique on schématise les limites géographiques d'un réseau comprenant plusieurs stations, tel qu'un hexagone 31 simulant par exemple des limites géographiques de la France, avec indication de trois stations ST1, ST2, ST3 symbolisant trois villes constituant un réseau. Chaque station est matérialisée sur le tableau synoptique 30 par l'intermédiaire d'un moyen de visualisation constitué par exemple par deux diodes électroluminescentes 32, 33, situées à proximité l'une de l'autre, une diode diffusant une couleur rouge et l'autre diode diffusant une couleur verte par exemple. A chaque paire de diodes 32, 33 matérialisant une station, est associée une paire des moyens de commande 34, 35 tels que des boutons-poussoirs pour commander l'allumage de ces deux diodes, respectivement. Le rôle de ces diodes sera explicité plus loin.

Ce tableau synoptique 30 fait donc partie d'une unité de communication U' installée dans au moins un local d'une station du réseau.

Cette unité de communication U' est complétée par au moins un ensemble intégré 36 reposant sur un support 37 tel qu'une table située sensiblement en regard du tableau synoptique 30. Cet ensemble 36 comprend une unité d'affichage 7 à deux lignes 7a, 7b, un commutateur 11, une unité formant lecteur 15 de badge 16, ces éléments correspondant et ayant la même fonction que ceux de l'unité de communication U représentée sur les figs 2 et 3. Cet ensemble 36 comprend également une unité d'émission formée par un micro 9 supporté par un pied 39 et jouant le même rôle que la capsule émission 9 de l'unité de communication U de la fig. 2. L'unité de réception est constituée par un haut-parleur central 10 situé en un endroit approprié du local renfermant l'unité de communication U', et jouant le même rôle que la capsule réception 10 de l'unité de communication U de la fig. 2.

L'unité de communication U' est avantageusement complétée par un dispositif de projection 41 qui permet de visualiser sur un écran 42 la photographie de la personne qui parle à un instant donné, et d'un tableau d'affichage alpha-numérique 43 possédant plusieurs lignes $l_1$ à $l_n$ et plusieurs colonnes par exemple au nombre de quatre $c_1$ à $c_n$, pour donner des informations sur l'état de la conférence, comme cela sera décrit plus loin.

Pour faciliter la mise en place d'une conférence à partir d'une telle unité de communication U', celle-ci est équipée de trois moyens de commande 44, 45, 46 constitués chacun par un bouton-poussoir situé par exemple à la partie inférieure du tableau synoptique 30. Les fonctions de ces boutons-poussoirs seront explicitées plus loin.

En se reportant à la fig. 5, il a été représenté de façon schématique les liaisons principales entre les éléments constitutifs d'une unité de communication U′ avec une ligne téléphonique reliant cette unité à au moins une autre unité d'un réseau.

Chaque ensemble 36 est relié par des lignes de liaison bidirectionnelles L′1 à un circuit de commutation et de commande 12′ lui-même relié:
— au tableau d'affichage 43 par des liaisons bidirectionnelles L′2,
— au tableau synoptique 30 par des liaisons bidirectionnelles L′3,
— au haut-parleur 10 par des liaisons unidirectionnelles L′4,
— à un dispositif de commande 41a du projecteur 41 par des liaisons unidirectionnelles L′5, et
— à la ligne téléphonique de sortie 14.

En liaison avec le tableau d'affichage alphanumérique 43, l'unité de commutation U′ comprend un microprocesseur P1 associé à une unité de commande C1, ce processeur P1 étant relié au tableau d'affichage 43 et au tableau synoptique 30 par l'intermédiaire de liaisons bidirectionnelles L′6.

En se reportant à nouveau à la fig. 1, plusieurs configurations de réseaux peuvent être envisagées dans le cadre de l'invention:

1) un réseau de communications bidirectionnelles entre deux personnes de deux stations parmi *n* stations ST1, ST2, ....., STN reliées deux à deux par des lignes téléphoniques 2 du réseau commuté.

Supposons que chacune des stations ST1, ST2, ... STn est équipée d'une unité de communications U telle que représentée sur la fig. 2, et qu'une personne P1 de la station ST1 cherche à joindre une personne P2 de la station ST2. Cette personne fait partie du répertoire de la mémoire M1 qui contient l'ensemble des correspondants connus et susceptibles d'être appelés. Chaque correspondant y est identifié par exemple par le nom physique ou moral, un préfixe et son numéro téléphonique.

Normalement, la personne P1 personnalise tout d'abord le micro et l'unité de communication U1 par l'introduction de son badge 16 dans le lecteur 15, et l'établissement de la communication avec la personne P2 s'effectue comme suit:
— la personne P1 commence à frapper sur le clavier alpha-numérique 4 de l'unité de communication U1 les premiers caractères du nom de la personne P2. Ces caractères sont comparés un à un aux caractères des noms de personnes préalablement enregistrés dans la mémoire M1 du processeur P (fig. 3) et parmi lesquels se trouve le nom de la personne P2. Cette recherche nominale abrégée s'effectue par l'intermédiaire de programmes pré-enregistrés dans la mémoire PROM du processeur P, et est identique à celle décrite dans la demande de brevet français n° 8 009 910 du 30 avril 1980, déposé au nom du demandeur et intitulée «Procédé pour établir une communication téléphonique à partir d'un poste téléphonique classique associé à un dispositif de recherche simplifiée d'un correspondant, ainsi qu'un tel dispositif pour la mise en œuvre du procédé».

Une fois le numéro de téléphone de la personne P2 retrouvé automatiquement dans la mémoire M1, sans que la personne P1 ait frappé tous les caractères composant le nom de la personne P2, la liaison téléphonique est établie automatiquement avec la personne P2. Cette étape revient donc à envoyer un signal d'appel depuis la station ST1 à la station ST2.

A la station ST2, ce signal d'appel peut tout simplement se traduire par une sonnerie classique.

Une personne de la station ST2 prévenue par cette sonnerie va alors répondre à ce signal d'appel en décrochant tout simplement le combiné 8 de l'unité de communication U2 de la station ST2 pour entrer en communication avec la personne P1.

Les étapes ci-dessus d'envoi d'un signal d'appel et de réponse à celui-ci sont connues en soi.

Si la personne présente à la station ST2 a préalablement personnalisé le micro de l'unité U2 de cette station en introduisant son badge 16 dans le lecteur 15, l'information codée de son nom vient s'afficher automatiquement sur la ligne d'affichage 7a de l'unité de communication U1 de la station ST1, dès que cette personne prend la parole. Une fois la personne P2 identifiée par la personne P1, la conversation téléphonique peut s'établir normalement entre elles, avec affichage simultané du nom de la personne qui parle ou locuteur sur les lignes d'affichage 7a des unités de communication U1 et U2.

Selon une autre caractéristique importante de la présente invention, il est possible de rappeler automatiquement un correspondant. Plus précisément, une fois la recherche d'un correspondant effectuée par l'émission sur la ligne 14 de son numéro de téléphone, il est possible de reconnaître automatiquement la tonalité identifiant un signal de non réponse du correspondant et la tonalité identifiant un signal d'occupation de la ligne. Dans le premier cas, le correspondant ne pourra être appelé à nouveau qu'en relançant une séquence complète d'appel comme définie précédemment. Dans le second cas, l'information personnalisée du correspondant identifiée dans la mémoire M1 est transférée dans une seconde mémoire M2 en traits tiretés sur la fig. 3.

Bien entendu, le second programme principal d'appel automatique d'un correspondant enregistré dans la mémoire PROM est modifié en conséquence, le premier programme principal étant attaché à la constitution du répertoire.

La mémoire M2 a une faible capacité, et dans la pratique, il est possible d'y enregistrer quatre informations personnalisées dans le but de ne pas compliquer le système. Lorsqu'au moins une information personnalisée est enregistrée dans cette mémoire, le dispositif 1 associé au poste téléphonique 2, lorsqu'il est dans un état disponible, peut ré-émettre automatiquement sur la ligne téléphonique 14 le numéro de téléphone contenu dans cette information personnalisée. Simultanément, pour prévenir l'utilisateur du poste téléphonique 2, l'information personnalisée est affichée sur l'unité d'affichage 9.

Lorsque l'on se trouve dans une telle séquence d'appel automatique, il peut être avantageux de faire apparaître sur l'unité d'affichage 7 et simultanément toutes les informations personnalisées enregistrées dans la mémoire M2 pour connaître le contenu de celle-ci.

Pour reconnaître celui des correspondants qui est rappelé automatiquement, l'information personnalisée correspondante peut se distinguer des autres sur l'unité d'affichage 7 par une surimpression par exemple.

Lorsqu'il y a plusieurs informations personnalisées enregistrées dans la mémoire M2, le programme qui gère la ré-émission automatique d'un numéro de téléphone, prend en compte successivement ces différentes informations de façon à respecter une temporisation imposée entre deux émissions successives d'un même numéro de téléphone.

Bien entendu, l'utilisateur de l'unité de communication U1 peut à tout moment interrompre la séquence automatique d'appel d'un correspondant, et utiliser son unité téléphonique de façon classique. En outre, les informations personnalisées contenues dans la mémoire M2 peuvent être à tout moment effacées de cette mémoire.

Enfin, selon une autre caractéristique importante du procédé conforme à l'invention, l'utilisateur du dispositif 1 peut composer une information personnalisée d'un nouveau correspondant, sans nécessairement introduire cette information dans le répertoire de la mémoire M1. La nouvelle information personnalisée est enregistrée dans une troisième mémoire (qui peut elle-même être constituée par la mémoire M2). Une fois la liaison téléphonique obtenue avec ce nouveau correspondant dont le numéro de téléphone a été composé manuellement sur le clavier numérique 8 et suivant l'intérêt de cette conversation, l'utilisateur du dispositif 1 peut décider de transférer ou non l'information personnalisée de ce nouveau correspondant dans le répertoire de la mémoire M1, en utilisant par exemple une touche particulière de l'un des claviers.

Il est à noter que la personne P1 de la station ST1 peut lancer un signal d'appel sans avoir automatiquement personnalisé le micro de son unité de communication, ce micro étant constitué par la capsule émission 9 du combiné téléphonique 8, combiné qui ne sera décroché que lorsqu'une personne de la station ST2 aura répondu. Bien entendu, si aucune personne ne personnalise son micro, la communication revient à une communication classique pure et simple entre deux postes téléphoniques classiques.

2) Un réseau de communications bidirectionnelles entre plusieurs personnes de deux stations parmi n stations ST1, ST2, ... STn reliées deux à deux par des lignes téléphoniques 2 du réseau commuté.

La procédure décrite dans le cas précédent pour permettre à une personne P1 d'une station ST1 d'entrer en communication avec une personne P2 d'une station ST2 s'applique également dans ce cas. Cependant, comme au moins une station est équipée de plusieurs unités de communication U (fig. 2) reliées entre elles localement et comme plusieurs personnes de cette station peuvent participer à une conférence entre les deux stations, l'appel de ces personnes par l'instigateur de la conférence situé à l'autre station peut s'effectuer de plusieurs façons. L'une d'elles peut consister tout simplement à émettre le signal d'appel d'une station à toutes les unités de communication U de la station appelée, ou prévoir éventuellement un opérateur à la station appelée pour effectuer le transfert du signal d'appel vers certaines seulement des unités de communication U après avoir été en communication avec l'instigateur de la conférence qui nomme les personnes qu'il désire effectivement appeler.

Chaque unité de communication appelée répond au signal d'appel comme dans le cas présent.

Dans cette configuration de réseau, il faut tenir compte du fait que plusieurs personnes appelées peuvent intervenir simultanément. Selon l'invention, une seule personne ne peut intervenir à la fois, et ce résultat est obtenu par le fait que dès qu'une personne ou locuteur prend la parole, seul son micro est en circuit, les micros des autres unités de communication sont automatiquement et provisoirement mis hors circuit, à condition toutefois que les premiers mots prononcés par cette personne aient une intensité sonore suffisante. Cette sélection est par exemple effectuée par des circuits de commande situés dans le circuit de communication et de commande 12 de chaque station (fig. 3).

Comme dans le cas précédent, la ligne d'affichage 7a de chaque unité de communication de la conférence affiche, à tout moment, le nom du locuteur.

Il est important de noter également que dans cette configuration où plusieurs personnes ont été initialement appelées pour participer à une conférence, toute personne non initialement invitée ne peut intervenir dans cette conférence, à moins d'y avoir été invitée éventuellement au cours de la conférence par l'une des personnes participant déjà à cette conférence.

3) Un réseau de communications bidirectionnelles entre deux personnes de deux stations parmi n stations ST1, ST2, ... STn reliées deux à deux par des lignes spécialisées 50.

En se reportant à la fig. 1, supposons que ces deux stations sont les stations ST1 et ST3, chacune de ces stations étant équipée d'une unité de communication conforme à celle représentée sur la fig. 2, et qu'une personne P1 de la station ST1 cherche à joindre une personne P3 de la station ST3.

La personne P1 personnalise son micro (capsule d'émission 9 du combiné 8) de son unité de communication U1, en introduisant son badge 16 dans le secteur 15, et l'établissement de la communication avec la personne P3 s'effectue comme dans les cas précédents.

Cependant, selon l'invention, on tire partie de l'utilisation d'une liaison spécialisée, comme cela va être décrit ci-dessous.

Par un multiplexage spatial approprié, on divise la bande passant 300 à 3000 Hz de chaque liaison spécialisée:

– en un premier canal allant d'environ de 300 à 2000 Hz réservé à la transmission de la parole,

– en un second canal allant d'environ de 2000 à 2500 Hz réservé à la transmission de données à 300 bauds, et

– plusieurs canaux supplémentaires, par exemple au nombre de quatre, allant d'environ de 2500 à 3000 Hz réservés à la transmission de signaux d'appel, de signaux de réponse et/ou de signaux de demande d'intervention.

Il est à noter que l'on pourrait diviser la bande passante différemment ou prévoir ou subdiviser un canal en plusieurs canaux. On pourrait ainsi prévoir un canal allant par exemple de 900 à 1100 Hz comme pour la télécriture.

Grâce à ce multiplexage, notamment lorsque la communication est établie entre les personnes P1 et P3, l'une d'elles peut transmettre simultanément des données vers l'autre personne en utilisant le second canal précité. Ces données peuvent être tapées directement sur le clavier alphanumérique 4 de l'unité de communication U. Ces données, une fois transmises par la liaison spécialisée 50, peuvent être reçues sur l'unité de communication réceptrice de plusieurs façons:

– être visualisées sur la ligne d'affichage 7a de l'unité U,

– être simultanément enregistrée dans l'enregistreur 20 de l'unité (fig. 3) sur un support magnétique tel qu'une cassette, et

– être simultanément imprimées sur l'unité imprimante 21.

Du côté émission, ces données, avant d'être transmises, peuvent être préalablement enregistrées dans l'enregistreur 20 de l'unité d'émission.

Ces données ou messages peuvent être transmis par une station vers une autre station sans que ces deux stations soient en communication verbale. Dans ce cas, le message est automatiquement enregistré sur l'unité d'enregistrement 20 de la station réceptrice. Si le support d'enregistrement est constitué par une cassette par exemple, qui peut par conséquent enregistrer plusieurs messages, il est avantageux, conformément à l'invention, d'imprimer simultanément sur l'unité imprimante 21 le nom du destinataire de ce message avec un indication numérique donnant la position du début du message sur la cassette.

Par mesure de sécurité, la personne désirant prendre connaissance d'un message, ne peut le faire qu'après avoir introduit son badge 16 dans le lecteur 15 pour être sûre que ce message sera restitué sur l'unité imprimante 21 ou sur la ligne d'affichage 7a à la personne à laquelle ce message est effectivement destiné. Pour cela, le début du message est toujours précédé du nom du destinataire, nom qui est ensuite comparé avec le nom enregistré sur le badge 16 de la personne qui veut prendre connaissance du message.

4) Un réseau de communications bidirectionnelles entre plusieurs personnes de deux stations ST1, ST3 parmi n stations reliées deux à deux par des liaisons spécialisées 50.

Par rapport au cas présent, chaque station ST1, ST3 comprend plusieurs unités de communication U comme celle illustrée sur la fig. 2.

Cette configuration diffère de la précédente, car il faut maintenant prendre en considération le fait qu'un seul locuteur peut parler à la fois. La validation d'un seul micro s'effectue comme précédemment indiqué.

Toutefois, grâce à l'utilisation d'une liaison spécialisée 50 entre les deux stations ST1, ST3, et l'utilisation d'un multiplexage spatial déterminé, il est possible à toute personne participant à une conférence mise en place entre les deux stations ST1, ST3, d'émettre un signal de demande d'intervention avec affichage du nom de cette personne ou demandeur sur la ligne d'affichage 7a de toutes les unités de communication U participant à cette conférence.

Cette opération s'effectue simplement en manœuvrant le commutateur 11 de l'unité de communication U, la personne ayant préalablement introduit son badge 16, portant son nom dans le lecteur de son unité. Aussitôt la manœuvre effectuée, le nom de la personne qui désire prendre la parole est transmis aux autres unités de la conférence par l'un des canaux supplémentaires précités de la liaison spécialisée 50, sans perturber pour autant une communication en cours. L'instigateur de la conférence peut ensuite donner la parole à ce demandeur dès qu'il le juge utile. Bien entendu, ce demandeur peut prendre d'office la parole par l'intermédiaire de son micro (capsule d'émission 9 du combiné téléphonique 8 de l'unité de communication U), mais ce type d'intervention peut être néfaste au bon déroulement de la conférence si cette procédure est utilisée dans un but d'obstruction.

Lorsque plusieurs personnes différentes déjà introduites dans la conférence, envoient un signal de demande d'intervention, toutes ces demandes apparaissent sur la ligne d'affichage 7a de toutes les unités participant à la conférence. Bien entendu, cet affichage est limité à la capacité d'affichage de cette ligne d'affichage qui peut comprendre par exemple 32 caractères et être augmenté considérablement en prévoyant un défilement des caractères. Etant donné que le nom du locuteur est également affiché sur la ligne d'affichage 7a, les noms des demandeurs apparaissent à la suite du nom du locuteur. En outre, toute personne participant ou non à la conférence mise en place peut émettre à tout moment des données par le second canal de la liaison spécialisée 50 à une ou plusieurs personnes si ce canal de transmission de données est libre.

Toute personne n'ayant pas été préalablement invitée à participer à une conférence, ne peut pas entrer directement dans cette conférence sans y avoir été préalablement invitée. Toutefois, cette personne a la faculté de faire connaître aux participants de la conférence son désir d'entrer dans cette conférence. Pour cela et après avoir introduit son badge 16 dans le lecteur 15 de son unité de communication, le demandeur manœuvre le commutateur 11, ce qui a pour effet de transmettre son nom sur la ligne d'affichage 7b de chaque unité de communication U participant à la conférence. Ensuite, une des personnes déjà invitées à la conférence peut valider le micro de l'unité de communication demanderesse par l'envoi d'un signal de validation transmis par un canal supplémentaire précité de la liaison spécialisée 50.

Pour améliorer la gestion des demandes d'intervention de personnes initialement invitées ou non à une conférence déjà en place, chaque unité de communication U (fig. 2) est pourvue de trois voyants V1, V2, V3.

Lorsque le voyant V1 est allumé, cela signifie que le canal de la liaison spécialisée réservé à la transmission de la parole est occupé. Lorsque le voyant V2 est allumé, cela signifie que le canal de transmission de données de la liaison spécialisée est occupé. Lorsque le voyant V3 est allumé, cela signifie que les canaux de transmission de signaux de signalisation de la liaison spécialisée sont occupés. Avec ces repères, une personne participant ou non à une conférence déjà mise en place, peut moduler son action en fonction de l'éclairement de ces voyants. Bien entendu, il est possible à ce demandeur d'émettre à tout moment des données vers les stations participant à la conférence, sans pour cela intervenir directement dans cette conférence.

5) Un réseau de communication multidirectionnelles entre plusieurs personnes de plusieurs stations parmi n stations ST1, ST2, ... STn reliées entre elles par des liaisons spécialisées 30.

Plus précisément, en se reportant à nouveau à la fig. 1, on considère un réseau de communications comprenant cinq stations ST1, ST2, ST3, ST4, ST5 implantées suivant une configuration en étoile avec une station centrale ST3 reliée à chacune des autres stations par une liaison spécialisée 50 et un commutateur central 51, de façon à permettre à l'une quelconque de ces stations d'appeler une ou plusieurs des autres stations. Bien entendu, ces stations peuvent simultanément être reliées entre elles deux à deux par une ligne téléphonique 2 du réseau commuté, comme cela est également indiqué sur la fig. 1.

Les principes de mise en place et de déroulement d'une conférence s'effectuent comme dans le cas précédent, avec les mêmes limitations pour une personne demandant à intervenir dans cette conférence sans y avoir été préalablement invitée.

Supposons maintenant qu'au moins certaines de ces stations telles que les stations ST3, ST4 et ST5 soient équipées d'une unité de communication U' telle que décrite sur les figs 4 et 5.

Ce réseau particulier est schématisé sur chaque tableau synoptique 30 des stations ST3, ST4, ST5.

Supposons qu'une personne de la station ST3 ou station centrale désire mettre en place une conférence avec des personnes situées dans les stations ST4 et ST5. La mise en place de cette conférence s'effectue comme suit:
— l'instigateur de la conférence se place devant le tableau synoptique 30 de son unité de communication U' et peut procéder de trois manières différentes après avoir de préférence personnalisé son micro 9 par l'introduction de son badge 16 dans le lecteur 15 de l'ensemble 36.

a) soit appuyer sur le bouton-poussoir 44 du tableau synoptique 30 qui a pour fonction de permettre d'effectuer un appel général vers toutes les stations du réseau, notamment vers les stations ST4 et ST5 dans l'exemple envisagé. Une fois manœuvré ce bouton-poussoir 44, l'instigateur de la conférence appuie sur le bouton-poussoir 45 assurant une fonction d'exécution, c'est-à-dire que l'unité de communication U' de la station ST3 émet un signal d'appel en direction des stations ST4 et ST5 du réseau. Ce signal d'appel est alors visualisé sur le tableau synoptique des stations ST4, ST5. Plus précisément, sur chaque tableau synoptique 30, la diode 32 de chaque station appelée est allumée de façon clignotante avec diffusion d'une couleur rouge, alors que la diode 32 de la station d'où émane le signal d'appel est allumée de façon fixe en diffusant également une lumière rouge.

b) soit appuyer sur le bouton-poussoir appel général 44, appuyer ensuite sur le bouton-poussoir 46 qui autorise l'instigateur de la conférence à enlever certaines stations qu'il ne désire pas introduire dans cette conférence. Pour effectuer cette suppression, l'instigateur se place devant le tableau synoptique 30 et appuie sur le bouton de commande 34 de la diode 32 alors clignotante de chaque station qu'il désire supprimer, cette opération ayant pour effet d'éteindre la diode 32 associée au bouton de commande 34. Ensuite, l'instigateur de la conférence appuie sur le bouton-poussoir 45 pour valider la conférence, cette validation ayant pour résultat de reproduire les informations du tableau synoptique de la station émettrice, sur les tableaux synoptiques 30 des stations appelées,

c) soit appuyer sur le bouton de commande 34 de chaque station qu'il désire appeler, pour allumer de façon clignotante la diode 32 correspondante du tableau synoptique 30. Ensuite, il appuie sur le bouton-poussoir exécution 45 comme précédemment.

Dans le cas présent, si les trois stations ST3, ST4, ST5 constituent le réseau, il suffit de faire un simple appel général depuis la station ST3, pour appeler les deux autres stations.

Toute personne située alors à proximité du tableau synoptique 30 de l'unité de communication U' appelée, a connaissance par la consultation de ce tableau synoptique 30 d'un appel émanant d'une autre station. La station émettrice d'un signal d'appel est obligatoirement identifiée par le fait que l'une des stations matérialisées sur le tableau synoptique 30 a sa diode 32 éclairée de façon fixe en diffusant une lumière rouge. La personne présente devant le synoptique 30 peut également savoir si sa station est appelée par le simple fait que la diode 32 matérialisant cette station sur le tableau synoptique 30 est éclairée de façon clignotante en diffusant également une lumière de couleur rouge.

Dans ces conditions, toute personne située à proximité du tableau synoptique 30 d'une station appelée peut connaître, grâce à ce tableau, la provenance d'un signal d'appel et l'invitation qui est faite à cette station de participer à une conférence par exemple.

En réponse à cet appel, chaque station appelée émet un signal de réponse vers la station d'où émane l'appel. Pour cela, il suffit à une personne d'une station appelée d'appuyer sur le bouton de commande 34 associé à la diode 32 matérialisant sa station sur le tableau synoptique 30, afin de rendre fixe l'allumage de cette diode. Une fois cette opération effectuée, toutes les diodes 32 des tableaux synoptiques 30 de toutes les stations devant participer à la conférence sont allumées de façon fixe.

Une fois la mise en place de la conférence effectuée et visualisée sur chaque tableau synoptique 30 des stations invitées, la conférence proprement dite peut commencer. Au départ, la diode 33 du tableau synoptique, qui matérialise la station d'où émane le signal d'appel est éclairée de façon fixe et diffuse une lumière verte. Cette information est également reproduite sur tous les tableaux synoptiques 30 des stations invitées à la conférence. Cela signifie que l'instigateur de la conférence est prêt à prendre la parole. Comme dans les cas précédents, une seule personne peut parler à la fois, les autres micros 9 des autres stations étant automatiquement mis hors circuit. Dès qu'une personne participant à la conférence désire prendre la parole, elle peut le faire soit directement en parlant devant son micro 9, préalablement validé par le signal d'appel émis par la station où se trouve l'instigateur de la conférence, dès l'instant où les premiers mots prononcés ont une intensité sonore dépassant un seuil déterminé, le micro 9 de la personne qui était en train de parler est alors mis hors circuit. Bien évidemment, pour maintenir son micro 9 en circuit, il n'est pas nécessaire que tous les mots suivants prononcés aient une intensité dépassant le seuil précité.

Par contre, si une personne participant à la conférence désire intervenir sans couper obligatoirement une conversation déjà en cours, il fait connaître sa demande soit en manœuvrant le commutateur 11 de l'ensemble 36 associé à son micro 9, soit en appuyant sur le bouton de commande 35 de la diode 33 du tableau synoptique 30 matérialisant la station où se trouve cette personne. L'une ou l'autre de ces opérations a pour but d'allumer de façon clignotante (couleur verte) la diode 33 correspondante. Cette information est également transmise à tous les tableaux synoptiques 30 des stations participant à la conférence et le nom du demandeur est visualisé sur la ligne d'affichage 7b de chaque ensemble 36 des stations 36 participant à la conférence. Ainsi, toutes les personnes des autres stations sont informées de cette demande d'intervention avec identification de la station d'où émane cette demande. Quand cette demande est validée, par exemple par l'instigateur de la conférence, la diode 33 correspondante matérialisant la station d'où émanait la demande s'allume de façon fixe (couleur verte). Cette commande est effectuée automatiquement dès que la personne prend la parole devant son micro 9. Ainsi, sur chaque synoptique 30 des stations participant à la conférence, une seule diode 33 peut être allumée de façon fixe (couleur verte), ce qui permet d'identifier la station du locuteur. Toute personne participant ou non à la conférence peut transmettre des données ou messages vers au moins une station participant ou non à une conférence en cours.

Toute personne d'une station ne participant pas à une conférence, et prenant connaissance de cette conférence par l'intermédiaire du tableau synoptique 30 de la station, peut demander à intervenir dans cette conférence, en matérialisant sa demande sur les tableaux synoptiques 30 des stations participant à cette conférence. L'entrée dans la conférence de la station demanderesse ne peut s'effectuer qu'après validation de son micro 9 par l'une des stations participant à la conférence, ceci afin d'éviter des entrées intempestives dans une conférence en cours. Bien entendu, le nom du locuteur au cours d'une conférence est visualisé sur la ligne d'affichage 7a de chaque ensemble 36 des stations participant à la conférence.

Jusqu'à présent, l'instigateur d'une conférence appelle dans un premier temps une station, puis dans un deuxième temps la ou les personnes de ces stations invitées à participer à la conférence en conversant avec les personnes des stations appelées qui ont répondu à son appel.

Il est cependant possible d'appeler nominativement et directement les personnes invitées à participer à une conférence. En se reportant à la fig. 5, une unité de communication U′ peut être équipée d'un micro-processeur P1 contenant un ensemble de programmes d'appel. A partir d'une unité de commande $C_1$, l'instigateur d'une conférence tape, par exemple, sur un clavier de cette unité de commande, ou sur le clavier 4 de l'unité de communication U de la fig. 2, un numéro de programme. Le programme correspondant contient les noms des personnes qui peuvent être directement appelées, le nom de ces personnes et le nom de leurs stations apparaissant en clair sur les différentes lignes du tableau d'affichage 43 de la fig. 4, avec indication automatique des stations appelées sur chaque synoptique 30 de ces stations avec les conventions précédemment définies pour l'allumage des diodes 32 et 33 matérialisant les stations.

Le tableau 43 comprend plusieurs lignes l1 à ln, et quatre colonnes c1 à cn. Une ligne du tableau 43 est attribuée à une station, la première colonne indiquant par l'illumination d'un caractère (X par exemple) la réponse de la personne appelée (le synoptique 30 n'indiquant que la station), la deuxième colonne affichant le nom de la station où se trouve la personne appelée, la troisième colonne affichant le nom de la personne appelée, et la quatrième colonne affichant le numéro de priorité, au cours de la conférence, des demandes d'intervention des personnes appelées, ce numéro étant décrémenté d'une unité lorsque la demande d'intervention d'une autre personne est satisfaite ou qu'un demandeur d'une demande d'intervention a procédé à l'annulation de sa demande, en ramenant par exemple le commutateur 11 de son unité de communication U' à sa position initiale.

Avantageusement, la photo du locuteur est affichée sur l'écran 42 par l'intermédiaire d'un projecteur 41 qui possède un fichier (fig. 5) dans lequel sont emmagasinés des micro-films ou microfiches reproduisant la photo des personnes potentielles susceptibles de participer à une conférence. La commande du projecteur 41 est effectuée par un code enregistré sur le badge 16 de chaque personne, code qui est transmis à l'unité de commande du projecteur 41 dès que la personne prend la parole.

En se référant à nouveau à la fig. 1, il est possible d'introduire dans une conférence ou de faire provoquer une conférence par une personne étrangère à un réseau, c'est-à-dire par une personne non située dans une station d'un réseau. Si l'on considère le réseau constitué par les stations ST1, ST2, ST3, ST4, ST5, une personne non présente dans l'une de ces stations, peut se raccorder à l'une d'elles par une ligne téléphonique 2 du réseau commuté. Cette personne dispose pour cela d'un équipement spécial contenu par exemple dans un attaché-case 60. Cet attaché-case comprend au moins un combiné téléphonique classique 61 raccordé à une unité d'émission 62 comprenant notamment un lecteur de badge, un circuit interface 63 sur lequel vient se raccorder le combiné téléphonique classique 65 d'un poste téléphonique classique 66 qui peut être par exemple raccordé à la station ST2 par une ligne téléphonique 2 du réseau commuté. Le badge 16 de cette personne doit en outre comporter un code de validation compatible avec le réseau pour lui en autoriser l'accès.

De façon similaire, il est possible à une station ST6 faisant partie d'un autre réseau de communication de communiquer avec le réseau constitué par les stations ST1, ST2, ST3, ST4, ST5, en se raccordant à l'une de ces stations, par exemple la station ST5, par l'intermédiaire d'une ligne téléphonique 2 du réseau commuté, avec bien entendu reconnaissance d'un code d'accès à ce réseau.

Il est à noter également que sur les liaisons spécialisées 50 représentées sur la fig. 1, il est possible d'incorporer des dispositifs de brouillage 68 pour permettre d'éviter toute indiscrétion de la part d'une tierce personne.

Toute station d'un réseau peut être par conséquent équipée soit d'une unité de communication U telle que celle représentée sur la fig. 2, soit d'une unité de communication U' telle que celle représentée sur la fig. 4, ou bien posséder ces deux unités. Chaque station peut également comprendre plusieurs de ces unités qui sont reliées ensemble en local, et le procédé conforme à l'invention peut également s'appliquer entre plusieurs unités de communication d'une même station.

Il est encore à ajouter que l'équipement d'une station U pourrait être complété par un dispositif horloge représenté schématiquement par H sur la fig. 3. Ce dispositif permettrait d'appeler un correspondant à une heure prédéterminée, de façon automatique. A cet effet, il est préférable que l'information concernant ce correspondant ait été transférée préalablement de la mémoire M1 à la mémoire M2 de plus faible capacité. A l'heure indiquée, après réception d'un signal de déclenchement engendré par ce dispositif H, le processeur organise l'appel du correspondant, de façon automatique, comme cela a été expliqué lors de la description de la fonction de la mémoire M2 à la suite d'un signal d'occupation du poste d'un correspondant. De cette manière, on pourrait transmettre un message préalablement enregistré, à tout moment voulu.

Il est encore à noter que les micros des personnes susceptibles de participer à une conférence et leurs systèmes de commande, pourraient avantageusement être agencés de telle manière que seul le micro du locuteur qui désire prendre la parole soit validé ou ouvert et ceci seulement après qu'il ait prononcé un mot clé prédéterminé, tandis que tous les autres micros restent fermés. Le mot clé pourrait être un mot qui ne fait pas partie du langage habituel et qui peut être facilement détecté par le système. A la fin de son intervention, le locuteur prononce à nouveau ce mot clé, ce qui entraînera la fermeture de son micro.

## Revendications

1. Procédé pour établir des communications bidirectionnelles et/ou multidirectionnelles par exemple du type téléphonique et/ou pour échanger des informations par exemple sous forme de données ou de messages téléphoniques entre différentes personnes regroupées en différentes stations géographiquement éloignées et reliées entre elles par des lignes téléphoniques, chaque station comprenant au moins une unité d'émission équipée d'au moins un micro, une unité de réception équipée d'au moins un haut-parleur, et une unité d'affichage, ledit procédé consistant, pour mettre en place une conférence entre différentes stations et à l'instigation de l'une de ces personnes, à faire émettre, par l'instigateur de la conférence et à partir d'un clavier de l'unité d'émission de sa station ou station source, un signal d'appel vers les stations où se trouvent les personnes invitées à participer à la conférence, à matérialiser ce signal d'appel à chacune des stations recevant ce signal, à faire répondre chaque station ayant reçu un signal d'appel, par l'émission d'un signal de réponse envoyé à la station pour faire partie de la conférence et à identifier le nom de la personne qui parle pendant la conférence sur l'unité d'affichage de chaque station participant à la conférence, caractérisé en ce qu'il consiste:

– à mettre en circuit l'unité d'émission de chaque station appelée à condition que: la station ait reçu un signal d'appel ou de validation; l'unité d'émission ait été personnalisée par une personne de la station et munie d'un support d'information individuel tel qu'un badge portant au moins ces informations codées propres à cette personne et notamment son nom, cette personnalisation étant effectuée par l'introduction de ce badge dans un dispositif de lecture de l'unité d'émission de la station; et qu'aucune autre personne, déjà entrée dans la conférence, ne parle;

– à identifier le nom du locuteur sur l'unité d'affichage de chaque station entrée dans la conférence, dès que le locuteur prend la parole, cette identification s'effectuant par le transfert automatique du nom codé du locuteur enregistré sur son badge préalablement introduit dans le lecteur de son unité d'émission, et en ce qu'il consiste, à tout moment, à n'avoir qu'un seul micro mis en circuit, cette mise en circuit étant automatique dès que les premiers mots prononcés par une personne ou locuteur présentent une intensité sonore qui dépasse un seuil prédéterminé, les autres micros étant alors automatiquement mis hors circuit.

2. Procédé selon la revendication 1, caractérisé en ce qu'il consiste, à tout moment au cours du déroulement de la conférence, à faire envoyer par une station participant à la conférence, un signal codé de demande d'intervention d'une personne de cette station, à visualiser cette demande d'intervention sur l'unité d'affichage des autres stations participant à la conférence, et à donner la parole à cette personne sur ordre de l'instigateur de la conférence par exemple, ce signal codé identifiant le nom de cette personne.

3. Procédé selon la revendication 1 ou 2, caractérisé en ce qu'il consiste, à tout moment au cours du déroulement de la conférence, à faire envoyer par une station non invitée à la conférence, un signal codé de demande d'intervention d'une personne de cette station, à visualiser cette demande d'intervention sur l'unité d'affichage des stations participant à la conférence, et à inviter ladite personne à participer à la conférence uniquement sur ordre de l'instigateur de la conférence, le micro de la station demanderesse étant mis hors-circuit tant que la station n'a pas reçu un signal de validation permettant de mettre en circuit le micro, et ce pour éviter toute entrée intempestive de personnes dans le réseau pouvant perturber la conférence.

4. Procédé selon l'une des revendications précédentes, caractérisé en ce qu'il consiste à relier l'ensemble des stations par des liaisons spécialisées et à transmettre éventuellement simultanément en utilisant un multiplexage spatial approprié:

– les signaux codés de l'intervention du locuteur,

– les signaux d'appel ou des signaux de réponse ou des signaux de demande d'intervention, et

– des signaux de données.

5. Procédé selon la revendication 4, caractérisé en ce qu'il consiste, pour autoriser des transmissions simultanées précitées entre au moins deux stations, à diviser en différents canaux la bande passante 300 à 3000 Hz de chaque liaison spécialisée entre deux stations:

– un premier canal de 300 à 2000 Hz réservé à la parole,

– un second canal de 2000 à 2500 Hz réservé à la transmission de données à 300 bauds, et

– quatre canaux supplémentaires de 2500 à 3000 Hz réservés à la signalisation constitués par des signaux d'appel, des signaux de réponse et/ou des signaux de demande d'intervention.

6. Procédé selon l'une des revendications précédentes, caractérisé en ce qu'il permet, simultanément ou non à la transmission des paroles d'un locuteur d'une station vers l'une ou plusieurs stations participant à une conférence, de faire envoyer par une station participant ou non à la conférence des données par le second canal précité en direction d'au moins une station participant ou non à la conférence, ces données sous forme de message étant enregistrées à la station réceptrice sur un support magnétique.

7. Procédé selon la revendication 6, caractérisé en ce qu'il consiste à associer un code à chaque message précité pour autoriser uniquement la prise de connaissance de ce message que par la personne à laquelle est destiné ce message, ce code étant comparé avec un code soit préalablement enregistré sur le badge de la personne qui, pour prendre connaissance d'un message, introduit son badge dans le dispositif de lecture de l'unité d'émission, soit en frappant ce code sur un clavier alpha-numérique de l'unité d'émission de la station.

8. Procédé selon la revendication 6 ou 7, caractérisé en ce qu'il consiste à pré-enregistrer chaque message précité sur un support magnétique avant de le transférer.

9. Procédé selon l'une des revendications précédentes, caractérisé en ce qu'il permet, simultanément ou non, à la transmission de la parole d'un locuteur d'une station vers l'une ou plusieurs stations, de permettre à une station participant ou non à la conférence, de dialoguer avec une unité informatique par une ligne téléphonique du réseau commuté pour prendre connaissance par exemple d'informations susceptibles ensuite d'être transmises à une ou plusieurs stations.

10. Procédé selon l'une des revendications 4 à 9, caractérisé en ce qu'il consiste à visualiser chaque message précité, à l'émission et à la réception, sur l'unité d'affichage de l'unité d'émission et/ou à imprimer ce message sur une imprimante.

11. Procédé selon l'une des revendications précédentes, caractérisé en ce qu'il consiste à faire identifier automatiquement sur toutes les unités d'affichage des stations participant à la conférence, la localisation géographique de la station source émettrice d'un signal d'appel,

– à faire identifier sur toutes unités d'affichage des stations participant à la conférence, la localisation géographique des stations émettrices d'un signal de réponse,

– à mettre en circuit le haut-parleur de l'unité de réception d'une station dès que celle-ci a émis soit un signal d'appel, soit un signal de réponse.

12. Procédé selon l'une des revendications précédentes, caractérisé en ce qu'il consiste à permettre à toute station de recevoir à tout moment un signal d'appel provenant d'une autre station, et à toute station non participante à une conférence en cours, de prendre connaissance automatiquement des différentes stations participant à cette conférence.

13. Procédé selon l'une des revendications précédentes, caractérisé en ce qu'il consiste, pour mettre en place une conférence à l'instigation d'une personne d'une station avec des personnes déterminées de plusieurs stations:

– à faire émettre par ladite personne un signal d'appel vers les stations où se trouvent lesdites personnes déterminées et le nom de ces personnes,

– à visualiser sur un même dispositif d'affichage de l'unité d'affichage de chaque station concernée, le nom de la station ou le nom de la ou des personnes demandées à cette station, et

– à ne valider dans chacune de ces stations le signal de réponse d'une station que si et seulement si ce signal de réponse est émis par la personne ou les personnes effectivement invitées à participer à la conférence.

14. Procédé selon la revendication 13, caractérisé en ce que le signal d'appel et les noms des personnes sont transmis automatiquement par un programme prédéterminé, les noms des personnes étant préalablement enregistrés dans une mémoire, et en ce qu'il consiste à gérer la file d'attente des demandes d'intervention au cours d'une conférence en attribuant un numéro de priorité à chaque demande, ce numéro étant affiché sur le dispositif d'affichage précité et est décrémenté d'une unité à chaque fois qu'une demande d'intervention est validée.

15. Procédé selon l'une des revendications précédentes, caractérisé en ce qu'il consiste à éviter chaque station d'un dispositif de visualisation sur lequel est visualisée la photo du locuteur.

16. Procédé selon la revendication 15, caractérisé en ce qu'il consiste à commander le dispositif de visualisation précité de chaque station à partir d'information enregistrées sur le badge du locuteur, cette commande ayant lieu dès que le locuteur prend la parole.

17. Procédé selon l'une des revendications précédentes, caractérisé en ce qu'il consiste à regrouper l'ensemble des stations dans un même réseau de communication, notamment en étoile avec une station centrale reliées aux autres stations du réseau par des liaisons spécialisées.

18. Procédé selon l'une des revendications précédentes, caractérisé en ce qu'il consiste à autoriser également la communication entre deux réseaux par une ligne téléphonique du réseau commuté.

19. Procédé selon la revendication 18, caractérisé en ce que chaque personne d'une station d'un réseau peut appeler ou être appelée par une personne située en dehors du réseau et reliée à cette station par une ligne du réseau commuté, ladite personne en dehors du réseau étant équipé notamment d'un dispositif d'émission comprenant un lecteur de badge, qui peut être directement raccordé à la capsule d'émission du combiné d'un poste téléphonique classique.

20. Procédé selon la revendication 19, caractérisé en ce qu'il consiste à attribuer à chaque réseau de communication, un code spécifique, toute personne étrangère à un réseau pouvant éventuellement communiquer avec ce réseau en possédant un badge possédant au moins une information codée compatible avec le code du réseau.

21. Procédé selon l'une des revendications précédentes, caractérisé en ce que l'ensemble des stations constituant un réseau de communication sont matérialisées à chaque station par un tableau synoptique reproduisant schématiquement les limites géographiques du réseau et situant la localisation des différentes stations de ce réseau, chaque localisation étant matérialisée par exemple par deux diodes électroluminescentes de couleur différente et allumées de façon clignotante ou fixe en fonction de l'état de chaque station au cours de la conférence, et permettre ainsi à toute personne d'une station de prendre connaissance rapidement et d'un seul coup d'œil des stations concernées par une conférence, de l'état de chaque station dans la conférence, et des demandes d'intervention éventuelles de stations faisant partie du réseau et demandant à entrer dans la conférence.

22. Procédé selon l'une des revendications précédentes, caractérisé en ce qu'une personne non présente dans une station d'un réseau peut, grâce notamment à une unité d'émission portative, se raccorder à une station du réseau par une ligne téléphonique du réseau commuté, pour participer à une conférence éventuellement mise en place à son instigation entre plusieurs stations de ce réseau.

23. Dispositif pour établir des communications bidirectionnelles et/ou multidirectionnelles par exemple du type téléphonique et/ou pour échanger des informations par exemple sous forme de données ou de messages téléphoniques selon le procédé tel que défini par au moins l'une des revendications précédentes, caractérisé en ce qu'il comprend un poste téléphonique notamment classique qui comporte au moins un clavier alphanumérique, une unité d'affichage et un ensemble de circuits de traitement constitué essentiellement par un micro-processeur comprenant une unité centrale, un ensemble mémoire dans lequel sont enregistrées des informations personnalisées constituant un répertoire, une mémoire morte programmable comprenant au moins un programme enregistré permettant d'assurer les différentes séquences automatiques de recherche et de lancement d'un appel téléphonique, et un circuit interface monté entre ledit micro-processeur, le clavier alpha-numérique et l'unité d'affichage ainsi qu'un circuit de commutation relié au poste téléphonique et à la ligne téléphonique et en ce qu'il comprend de plus un second ensemble mémoire pour enregistrer l'information personnalisée précitée d'un correspondant retrouvé dans le répertoire précité, mais dont la séquence d'appel s'est traduite par un signal d'occupation de la ligne, en vue d'effectuer à nouveau et automatiquement, après une temporisation, au moins une tentative de joindre ce correspondant.

24. Dispositif selon la revendication 23, caractérisé en ce que le second ensemble mémoire comprend une mémoire de faible capacité, adaptée à l'enregistrement d'un nombre réduit d'informations personnalisées et en ce que les circuits de traitement sont adaptés pour assurer, de façon successive, des rappels automatiques des abonnés associés à une information personnalisée.

25. Dispositif selon la revendication 24, caractérisé en ce que l'unité d'affichage est de nature à permettre l'affichage simultané de toutes les informations personnalisées contenues dans le second ensemble mémoire et comprenant avantageusement une marque indicative de l'information personnalisée faisant l'objet d'un rappel automatique, mais dont la séquence d'appel s'est traduite par un signal d'occupation de la ligne, en vue d'effectuer à nouveau et automatiquement, après une temporisation, au moins une tentative de joindre ce correspondant.

26. Dispositif selon la revendication 24 ou 25, caractérisé en ce qu'il comprend un troisième ensemble mémoire pour enregistrer une information personnalisée d'un nouveau correspondant avant d'introduire éventuellement cette information dans le répertoire précité, en fonction de l'intérêt de ce correspondant une fois celui-ci joint.

27. Dispositif selon la revendication 25 ou 26, caractérisé en ce que le second ensemble mémoire et le troisième ensemble mémoire sont constitués par une seule et même mémoire.

28. Dispositif selon l'une des revendications 24 à 27, caractérisé en ce qu'il comprend un clavier numérique pour entrer les numéros de téléphone des correspondants dans le répertoire précité.

29. Dispositif selon l'une des revendications 24 à 28, caractérisé en ce qu'il comprend une clé de sécurité pour placer le dispositif en mode de réception uniquement lorsque le répertoire précité est en train de se constituer.

30. Dispositif selon la revendication 24, caractérisé en ce qu'une station précitée comprend un dispositif/horloge relié au mirco-processeur et ce dernier est agencé pour déclencher à la suite d'un signal reçu du dispositif/horloge à une heure préalablement enregistrée dans celui-ci un appel automatique d'un correspondant dont l'information personnalisée a été préalablement introduite dans une seconde mémoire de plus faible capacité.

31. Dispositif pour établir des communications bidirectionnelles et/ou multidirectionnelles par exemple du type téléphonique et/ou pour échanger des informations par exemple sous forme de données ou de messages téléphoniques, entre différentes personnes regroupées en différentes stations géographiquement éloignées et reliées entre elles par des lignes téléphoniques, chaque station d'un réseau comprenant un appareillage comprenant au moins une unité d'émission équipée d'un micro, une unité de réception équipée d'un haut-parleur et une unité d'affichage à diodes électroluminescentes, caractérisé en ce que chaque station comprend également une unité formant lecteur d'un support d'information individuel tel qu'un badge sur lequel est enregistré le nom de la personne possédant le badge pour aller inscrire le nom de cette personne sur l'unité d'affichage de chaque station entrée dans la conférence lorsqu'elle intervient, et une unité interface reliant ces différentes unités à une ligne téléphonique, cet appareillage étant situé à chaque station d'un réseau de communication comprenant plusieurs stations reliées entre elles par des lignes téléphoniques et notamment par des liaisons spécialisées.

32. Dispositif selon la revendication 31, caractérisé en ce que l'appareillage précité situé à une station d'un réseau peut comprendre également un tableau synoptique reproduisant schématiquement les limites géographiques d'un réseau regroupant plusieurs stations et situant la localisation des différentes stations de ce réseau, chaque station étant matérialisée par des moyens susceptibles d'émettre de la lumière tels que des diodes électroluminescentes dont l'état lumineux renseigne, à tout moment, de l'état de cette station au cours d'une conférence, ces moyens étant commandés automatiquement et/ou manuellement suivant l'évolution de la conférence.

33. Dispositif selon la revendication 31 ou 32, caractérisé en ce que l'appareillage précité d'une station peut comprendre également un tableau d'affichage à plusieurs colonnes pour visualiser:

− le nom de chaque station invitée à entrer dans une conférence, le nom de la ou des personnes de ces stations invitées à participer à cette conférence,

− une information indiquant que la station appelée a répondu à l'invitation d'entrée dans la conférence, et

− une information, par exemple sous forme numérique, pour indiquer le numéro dans la file d'attente d'une demande d'intervention émanant d'une personne de sa station.

34. Dispositif selon l'une des revendications 31 à 33, caractérisé en ce qu'il comprend des moyens détecteurs d'un mot clé prédéterminé prononcé par un locuteur et en ce qu'il commande uniquement la validation du micro de ce locuteur, les autres micros étant maintenus fermés, le micro du locuteur étant avantageusement fermé lors de la détection d'un deuxième mot clé.

35. Dispositif selon l'une des revendications 23 à 34, caractérisé en ce qu'une personne non présente dans une station d'un réseau de communication possède un appareillage spécial susceptible d'être raccordé, par une ligne téléphonique du réseau commuté, à une station d'un réseau, ledit appareillage étant constitué d'au moins une unité d'émission, une unité de réception, un lecteur de badge, et un circuit interface sur lequel vient se raccorder le combiné d'un poste téléphonique classique par exemple.

**Claims**

1. A method for establishing bidirectional and/or multidirectional communications for instance of the telephone type and/or for exchanging information for instance in the form of telephone data or messages between different persons grouped into different geographically distant stations and interconnected by telephone lines, each station comprising at least one emitting unit equipped with at least one microphone, a receiving unit equipped with at least one loud-speaker, and a display unit, said method consisting, in order to start a conference between different stations and upon the initiative of one of those persons, in emitting, by the initiator of the conference and from the keyboard of the emitting unit of this station or source station, a call signal to the stations where the persons to be invited to participate in the conference are located, materializing said call signal at each of the stations receiving that signal, causing each station having received a call signal to reply by emitting a reply signal sent over to the station to participate in the conference and identifying the name of the speaking person during the conference on the display unit of each station participating in the conference, characterized in that it consists in:
— switching on the emitting unit of each called station provided that: the station has received a call or validation signal; the emitting unit has been personalized by a person of the station and provided with an individual information medium such as a badge carrying at least coded information peculiar to that person and particularly his name, this personalization being effected by inserting said badge into a reading device of the emitting unit of the station; and that no other person already entered into the conference speaks;
— identifying the name of the speaker on the display unit of each station entered into the conference, as soon as the speaker starts to speak, this identification being effected by automatically transferring the coded name of the speaker recorded on this badge previously inserted into the reader of this emitting unit, and in that it consists, at any time, in having only one microphone switched on, said switching on taking place automatically as soon as the first words said by a person or speaker reach a sound volume exceeding a predetermined threshold, the other microphones then being automatically switched off.

2. A method according to claim 1, characterized in that it consists, at any time during the progress of the conference, in sending from a station participating in the conference, a coded request signal for intervention of a person of that station, in displaying said request for intervention on the display unit of the other stations participating in the conference, and in allowing said person to speak on the order of for instance the initiator of the conference.

3. A method according to claim 1 or 2, characterized in that it consists, at any time during the progress of the conference, in sending from a station not invited to participate to the conference, a coded request signal for intervention of a person of that station, in displaying said request for intervention on the display unit of the station participating in the conference, and in inviting said person to participate in the conference solely on the order of the initiator of the conference, the microphone of the requesting station being switched off as long as the station has not received a validation signal allowing the microphone to be switched on, and in order to prevent any person from disturbing the conference by entering into the network untimely.

4. A method according to any preceding claim, characterized in that it consists in connecting together all the stations through special connection and in transmitting possibly simultaneously by using an appropriate spatial multiplexing:
— the coded signals of the speaker's intervention,
— the call signals or reply signals or request for intervention signals, and
— the data signals.

5. A method according to claim 4, characterized in that it consists, for authorizing said simultaneous transmissions between at least two stations, in dividing into different channels the pass band from 300 to 3000 c.p.s. of each special connection between two stations:
— a first channel of from 300 to 2000 c.p.s reserved for speech,
— a second channel of from 2000 to 2500 c.p.s. reserved for the transmission of data at 300 bauds, and
— four additional channels of from 2500 to 3000 c.p.s. reserved for signalling, constituted by call signals, reply signals and/or request for intervention signals.

6. A method according to any preceding claim, characterized in that it allows, simultaneously or not simultaneously with the transmission of a speaker's speech from one station to another or several stations participating in the conference, to have data transmitted by a station participating or not participating in the conference through said second channel to at least one station participating or not participating in the conference, said data in the form of a message being recorded at the receiving station on a magnetic medium.

7. A method according to claim 6, characterized in that it consists in associating a code with each said message to authorize exclusively the person for whom the message is intended to become acquainted the therewith, said code being compared with a code either previously recorded on the badge of the person who, in order to be informed of a message, inserts his badge into the reading device of the emitting unit, or by taping out said code on an alpha-numeric keyboard of the emitting unit of the station.

8. A process according to claim 6 or 7, characterized in that it consists in pre-recording each said message on a magnetic medium before transferring it.

9. A method according to any preceding claim, characterized in that it consists, simultaneously or not simultaneously with the transmission of a speaker's speech from one station to one or several other stations, in allowing a station participating or not participating in the conference to dialogue with a data processing unit through a telephone line of the switched network in order for instance to receive information which may thereafter be transmitted to one or several stations.

10. A method according to one of claims 4 to 9, characterized in that it consists in displaying each said message, upon the emission or the reception thereof, on the display unit of the emitting unit and/or printing this message on a printer.

11. A method according to any preceding claim, characterized in that it consists in automatically identifying on all the display units of the stations participating in the conference, the geographical location of the source station emitting a call signal,
– in identifying on all the display units of the stations participating in the conference, the geographical location of the stations emitting a reply signal,
– in switching on the loud-speaker of the receiving unit of a station as soon as the latter has emitted either a call signal, or a reply signal.

12. A method according to any preceding claim, characterized in that it consists in allowing any station to receive at any time a call signal from another station, and in allowing any station not participating in a conference in progress to be automatically informed of the various stations participating in that conference.

13. A method according to any preceding claim, characterized in that it consists, in order to establish a conference upon the initiative of a person of a station with predetermined persons of several stations:
– in transmitting by said person a call signal to the stations where said predetermined persons are located and the name of those persons,
– in displaying on one and the same display device of the display unit of each station concerned the name of the station or the name of the person or persons called at that station, and,
– in validating in each of those stations the reply signal of a station only if said reply signal is emitted by the person or persons actually asked to participate in the conference.

14. A method according to claim 13, characterized in that the call signal and the names of the persons are automatically transmitted by a predetermined program, the names of the persons being previously recorded in a memory, and in that it consists in managing the queue of requests for intervention during a conference by attributing a priority number to each request, this number being displayed on said display device and being decreased by one unit every time a request or intervention is validated.

15. A method according to any preceding claim, characterized in that it consists in equipping each station with a display device on which the speaker's photograph is displayed.

16. A method according to claim 15, characterized in that it consists in controlling said display device of each station by means of the information recorded on the speaker's badge, said control taking place as soon as the speaker starts to speak.

17. A method according to any preceding claim, characterized in that it consists in grouping all the stations into a same communication network, particularly a star network with a central station connected to the other stations of the network by special connections.

18. A method according to any preceding claim, characterized in that it consists in authorizing also the communication between two networks through a telephone line of the switched network.

19. A method according to claim 18, characterized in that each person of a station of a network can call or be called by a person located outside the network and connected to that station through a line of the switched network, said person outside the network being equipped particularly with an emitting device comprising a badge reader, which may be directly connected to the emitting capsule of the handset of a conventional telephone set.

20. A method according to claim 19, characterized in that it consists in attributing to each communication network a specific code, each person alien to a network being capable, if appropriate, of communicating with that network by being provided with a badge carrying at least one coded information compatible with the code of the network.

21. A method according to any preceding claim, characterized in that all of the stations forming a communication network are materialized at each station by a synoptic panel diagrammatically reproducing the geographical limits of the network and indicating the location of the various several stations of that network, each station being represented by for instance two light-emitting diodes of different colors illuminated either intermittently of fixedly depending upon that state of each station during the conference, thus allowing any person pertaining to a station to be informed rapidly and at a glance of the stations involved in the conference, of the state of each station participating in the conference and of the possible requests for intervention from stations froming part of the network and desiring to enter into the conference.

22. A method according to any preceding claim, characterized in that a person not present in a station of a network may, by means, for example, of a portable emitting unit, connect to a station of the network through a telephone line of the switched network, in order to participate in a conference possibly started upon his initiative between several stations of that network.

23. A device for establishing bidirectional and/or multidirectional communications for instance of the telephone type and/or exchanging information for instance in the form of telephone date or messages, according to the method as defined by at least one of the preceding claims, characterized in that it comprises a telephone set, e.g. of a conventional type, including at least one alpha-numeric keyboard, a display unit and a set of processing circuits constituted essentially by a micro-processor comprising a central unit, a memory unit in which is recorded the personalized information constituting said repertory, a programmable read only memory comprising at least one recorded programme ensuring the various automatic sequences of a telephone call search and launch, and an interface circuit inserted between said microprocessor, alpha-numeric keyboard and display unit as well as a switching circuit connected to the telephone set and to the telephone line and in that it further comprises a second memory unit for registering said personalized information of a person retrieved from said repertory, but whose call sequence resulted in a busy line signal, in order to effect again and automatically, after a certain time delay, at least one attempt to get in touch with that person.

24. A device according to claim 23, characterized in that said second memory unit comprises a memory of a small capacity adapted to record a reduced number of personalized information and in that said processing circuits are adapted to ensure successively automatic recalls suscribers associated with a personalized information.

25. A device according to claim 24, characterized in that said display unit is of a nature to allow simultaneous display of all of the personalized information contained in said second memory unit and comprising advantageously a mark indicating the personalized information involved in an automatic recall, but the call sequence of which has resulted in a busy line signal, in order to effect again and automatically, after a certain time delay, at least one attempt to get in touch with that person.

26. A device according to claim 24 or 25, characterized in that it comprises a third memory unit for registering a personalized information concerning a new correspondent before possibly introducing that information into said repertory, depending upon whether said correspondent is of interest or not, after getting in touch with him.

27. A device according to claim 25 or 26, characterized in that said second and third memory units are constituted by one and same memory.

28. A device according to one of claims 24 to 25, characterized in that it comprises a digital keyboard for entering the correspondents telephone numbers into said repertory.

29. A device according to one of claims 24 to 28, characterized in that it comprises a safety key for putting the device in the receiving mode only when said repertory is being constituted.

30. A device according to claim 24, characterized in that an afore-mentioned station comprises a clock device connected to said microprocessor and in that the latter is adapted to start, following a signal received from the clock device at a time previously recorded in the latter, an automatic call to a correspondent whose personalized information has previously been introduced into a second memory of smaller capacity.

31. A device for establishing bidirectional and/or multidirectional communications for instance of the telephone type and/or for exchanging information for instance in the form of telephone data or messages, between different persons grouped into different geographically distant stations connected together by telephone lines, each station of a network comprising an equipment comprising at least one emitting unit provided with a microphone, a receiving unit provided with a loudspeaker and a display unit with light-emitting diodes, characterized in that each station further comprises a unit for reading information from an individual information medium such as a badge on which is recorded the name of a person possessing the badge for entering the name of that person on the display unit of each station participating in the conference when said person intervenes, and an interface unit connecting these different units to a telephone line, this equipment being located at each station of a communication network comprising several stations connected therebetween by telephone lines and particularly by special connections.

32. A device according to claim 31, characterized in that said equipment located at a station of a network may further comprise a synoptic panel diagrammatically reproducing the geographical limits of a network grouping several stations and indicating the location of the various stations of that network, each station being represented by means capable of emitting light such as light-emitting diodes, whose luminous state indicates at any moment the state of that station during a conference, said means being controlled automatically and/or manually according to the progress of the conference.

33. A device according to claim 31 or 32, characterized in that said equipment of a station may further comprise a display board with several columns for displaying:

– the name of each station invited to enter into the conference, the name of the person or persons of those stations invited to participate in that conference,

– an information indicating that the called station has replied to the invitation to enter into the conference and

– an information, for instance in digital form, for indicating the queue number of a request for intervention originating from a person of that station.

34. A device according to one of claims 31 to 33, characterized in that it comprises means for detecting a predetermined key word said by a speaker and in that it controls only the validation of the microphone of that speaker, the other microphones being kept closed, the microphone of the speaker being advantageously closed during the detection of a second key word.

35. A device according to one of claims 23–34, characterized in that a person not present in a station of a communication network may possess a special equipment capable of being connected, by a telephone line of the switched network, to a station of a network, said special equipment being constituted by at least one emitting unit, one receiving unit, one badge reading device, and an interface circuit to which is connected for example the handset of a conventional telephone.

## Patentansprüche

1. Verfahren zur Erstellung von Zwei- und/oder Mehrwegegesprächsverbindungen, z.B. Telefonverbindungen, und/oder zum Austauch von Informationen z.B. in Form von Daten oder Telefonmitteilungen zwischen verschiedenen Personen, die in geographisch voneinander entfernten verschiedenen Stationen gruppiert und untereinander durch Telefonleitungen verbunden sind, wobei jede Station wenigstens eine mit wenigstens einem Mikrophon ausgerüstete Sendeeinheit und wenigstens eine mit einem Lautsprecher ausgerüstete Empfangseinheit und eine Anzeigeeinheit besitzt, wobei das genannte Verfahren darin besteht, zwischen verschiedenen Stationen und auf Veranlassung einer dieser Personen eine Konferenz zu erstellen, durch den Veranlasser der Konferenz und von einem Tastenfeld der Sendeeinheit der Station des Veranlassers oder der Ausgangsstation ein Anrufsignal zu den Stationen zu senden, in denen sich Personen befinden, die zur Teilnahme an der Konferenz eingeladen worden sind, dieses Anrufsignal in jeder dieses Signals empfangenden Stationen zu materialisieren, jede Station, die dieses Anrufsignal erhalten hat, dazu zu bringen, durch Aussenden eines Antwortsignals, das an die Station gesandt worden ist, zu antworten, um an der Konferenz teilzunehmen und den Namen der Person, die während der Konferenz spricht, auf der Anzeigeeinheit jeder an der Konferenz teilnehmenden Station anzugeben, dadurch gekennzeichnet, dass es darin besteht:
– die Sendeeinheit der angerufenen Station einzuschalten, wenn gewährleistet ist, dass die Station ein Anrufsignal oder ein Gültigmachungssignal empfangen hat, die Sendeeinheit durch eine Person dieser Station personalisiert worden ist, die mit einem Träger individueller Information wie einem Abzeichen, das wenigstens diese Information kodiert, die diese Person betreffen, insbesondere deren Namen trägt, wobei die Personalisierung nach der Einführung des Abzeichens in eine Lesevorrichtung der Sendeeinheit der Station durchgeführt wird, und dass keine andere Person, die bereits in die Konferenz eingetreten ist, spricht;

– dass der Namen der sprechenden Person auf der Anzeigeeinheit jeder in die Konferenz eingetretenen Station identifiziert wird, wobei diese Identifizierung durch die automatische Übertragung des kodierten Namens der sprechenden Person, der auf dessen Abzeichen, das vorher in den Leser deren Sendeeinheit eingeführt worden ist, eingespeichert worden ist,

– und dass zu jedem Zeitpunkt nur ein einziges Mikrophon eingeschaltet ist, wobei dieses Einschalten automatisch erfolgt, sobald die ersten Worte, die von einer Person oder einem Sprecher vorgebracht worden sind, eine Schallstärke besitzen, die eine vorgegebene Schwelle übersteigt, wobei die anderen Mikrophone dann automatisch ausgeschaltet werden.

2. Verfahren nach Anspruch 1, dadurch gekennzeichnet, dass es darin besteht, dass zu jedem Zeitpunkt während des Ablaufes der Konferenz von einer an der Konferenz teilnehmenden Station ein kodiertes Signal zur Nachfrage einer Intervention einer Person dieser Station ausgesendet wird, diese Interventionsbitte auf der Anzeigeeinheit der anderen an der Konferenz teilnehmenden Stationen sichtbar gemacht wird und dieser Person auf Anordnung der z.B. der die Konferenz veranlassenden Person das Wort erteilt wird, wobei dieses kodierte Signal den Namen dieser Person identifiziert.

3. Verfahren nach Anspruch 1 oder 2, dadurch gekennzeichnet, dass es darin besteht, zu jedem Zeitpunkt während des Ablaufes der Konferenz von einer nicht zur Konferenz eingeladenen Station ein kodiertes Interventionsbittesignal einer Person dieser Station auszusenden, diese Interventionsbitte auf der Anzeigeeinheit der an der Konferenz teilnehmenden Stationen sichtbar zu machen und die genannte Person einzuladen, an der Konferenz lediglich auf Anordnung des Veranlassers der Konferenz teilzunehmen, wobei das Mikrophon der nachfragenden oder bittenden Station ausgeschaltet ist, solange die Station ein Gültigmachungssignal noch nicht erhalten hat, das es gestattet, das Mikrophon einzuschalten, um jedes ungewollte Eintreten von Personen in das Netz, was die Konferenz stören könnte, auszuschliessen.

4. Verfahren nach einem der vorangehenden Ansprüche, dadurch gekennzeichnet, dass es darin besteht, die Gesamtheit der Stationen durch spezielle Verbindungen zu verbinden und unter gegebenenfalls gleichzeitiger Verwendung einer geeigneten räumlichen Multiplexierung:
– die kodierte Interventionssignale der sprechenden Person,
– die Anrufsignale oder Antwortsignale oder Interventionsnachsuchesignale, und
– Datensignale zu übertragen.

5. Verfahren nach Anspruch 4, dadurch gekennzeichnet, dass es um die genannten gleichzeitigen Übertragungen zwischen wenigstens zwei Stationen zu erlauben, darin besteht, das Übertragungsband von 300 bis 3000 Hz jeder speziellen Verbindung zwischen zwei Stationen in verschiedene Kanäle zu unterteilen:

– einen ersten Kanal von 300 bis 2000 Hz, der für die Sprache reserviert ist,

– einen zweiten Kanal zwischen 2000 und 2500 Hz, der zur Übertragung von Daten bis 300 Baud, und

– vier zusätzliche Kanäle von 2500 bis 300 Hz, die zur Signalisierung reserviert sind, die von den Anrufsignalen, Beantwortssignalen und/oder den Interventionsnachfragesignalen gebildet wird.

6. Verfahren nach einem der vorangehenden Ansprüche, dadurch gekennzeichnet, dass es es erlaubt, gleichzeitig oder nicht gleichzeitig mit der Übertragung der Worte eines Sprechers von einer Station zu einer oder zu mehreren an der Konferenz teilnehmenden oder nicht an der Konferenz teilnehmenden Stationen Daten über den genannten zweiten Kanal zu wenigstens einer an der Konferenz teilnehmenden oder nicht teilnehmenden Station zu senden, wobei diese in Form von einer Mitteilung vorliegenden Daten in der Empfangsstation auf einem Magnetträger aufgezeichnet werden.

7. Verfahren nach Anspruch 6, dadurch gekennzeichnet, dass es darin besteht, jeder genannten Mitteilung oder Nachricht einen Kode zuzuordnen, damit nur die Person, der diese Nachricht bestimmt ist, davon Kenntnis nehmen kann, wobei dieser Kode mit einem Kode verglichen wird, der entweder vorher auf dem Abzeichen der Person, die zur Kenntnisnahme einer Nachricht oder Mitteilung ihr Abzeichen in die Lesevorrichtung der Sendeeinheit eingeführt hat, aufgezeichnet worden ist, oder auf einem alpha-numerischen Tastenfeld der Sendeeinheit der Station eingetastet worden ist.

8. Verfahren nach Anspruch 6 oder 7, dadurch gekennzeichnet, dass es darin besteht, jede genannte Nachricht auf einem magnetischen Träger vor der Übertragung aufzuzeichnen.

9. Verfahren nach einem der vorangehenden Ansprüche, dadurch gekennzeichnet, dass es es erlaubt, gleichzeitig oder nicht mit der Übertragung der Sprache eines Sprechers von einer Station zu einer oder mehreren Stationen, einer an der Konferenz teilnehmenden oder nicht teilnehmenden Station es zu erlauben, mit einer Informatikeinheit über eine Telefonleitung des geschalteten Netzes ein Wechselgespräch zu führen, um z.B. von Informationen Kenntnis zu nehmen, die anschliessend zu einer oder mehreren Stationen übertragen werden können.

10. Verfahren nach einem der Ansprüche 4 bis 9, dadurch gekennzeichnet, dass es darin besteht, jede genannte Nachricht beim Aussenden und beim Empfang auf der Anzeigeeinheit der Sendeeinheit sichtbar zu machen und/oder diese Nachricht mit einem Drucker zu drucken.

11. Verfahren nach einem der vorangehenden Ansprüche, dadurch gekennzeichnet, dass es darin besteht, automatisch auf allen Anzeigeeinheiten der an der Konferenz teilnehmenden Stationen den geographischen Ort der Quellenstation, die ein Anrufsignal ausgesendet hat zu identifizieren,

– auf allen Anzeigeeinheiten der an der Konferenz teilnehmenden Stationen den geographischen Ort der ein Antwortssignal aussendenden Stationen zu identifizieren,

– den Lautsprecher der Empfangseinheit einer Station einzuschalten, sobald diese entweder ein Anrufsignal oder ein Antwortssignal ausgesendet hat.

12. Verfahren nach einem der vorangehenden Ansprüche, dadurch gekennzeichnet, dass es darin besteht, es jeder Station zu erlauben, zu jedem Zeitpunkt ein Anrufsignal zu empfangen, das von einer andern Station kommt, und es jeder an einer stattfindenden Konferenz teilnehmenden oder nicht teilnehmenden Stationen zu erlauben, automatisch von den verschiedenen Stationen, die an diese Konferenz teilnehmen, Kenntnis zu nehmen.

13. Verfahren nach einem der vorangehenden Ansprüche, dadurch gekennzeichnet, dass es darin besteht, zur Veranstaltung einer Konferenz auf Veranlassung einer Person einer Station mit bestimmten Personen anderer Stationen:

– durch die genannte Person ein Anrufsignal zu den Stationen, in denen sich die vorbestimmten genannten Personen befinden, und den Namen dieser Personen auszusenden,

– auf ein und derselben Anzeigevorrichtung der Anzeigeeinheit jeder betroffenen Station den Namen der Station und den Namen der in dieser Station nachgefragten Person oder Personen sichtbar zu machen und,

– in jeder dieser Stationen das Antwortssignal einer Station nur dann gültig zu machen, wenn lediglich dieses Antwortssignal von der Person oder den Personen, die tatsächlich zur Teilnahme an der Konferenz eingeladen worden sind, ausgesendet wird.

14. Verfahren nach Anspruch 13, dadurch gekennzeichnet, dass das Anrufsignal und die Namen der Personen automatisch durch ein vorbestimmtes Programm übertragen werden, wobei die Namen der Personen vorher in einen Speicher eingetragen worden sind, und dass es darin besteht, die Warteliste der Interventionsbitten während einer Konferenz so zu leiten, dass jedem Bitter oder Nachfrager eine Prioritätsnummer zugeordnet wird, wobei diese Nummer auf der genannten Anzeigeeinheit angezeigt wird und jedes Mal, wenn eine Interventionsnachfrage gültig gemacht worden ist, um eine Einheit vermindert wird.

15. Verfahren nach einem der vorangehenden Ansprüche, dadurch gekennzeichnet, dass es darin besteht, jede Station mit einer Vorrichtung zur Sichtbarmachung auszurüsten, auf der die Photographie des Sprechers sichtbar gemacht wird.

16. Verfahren nach Anspruch 15, dadurch gekennzeichnet, dass es darin besteht, die genannte Vorrichtung zur Sichtbarmachung jeder Einheit von den auf dem Abzeichen des Sprechers aufgezeichneten Informationen ausgehend zu steuern, wobei diese Steuerung stattfindet, sobald der Sprecher das Wort ergreift.

17. Verfahren nach einem der vorangehenden Ansprüche, dadurch gekennzeichnet, dass es darin besteht, die Gesamtheit der Stationen in ein und demselben Gesprächsnetz, insbesondere in Sternform mit einer zentralen Station, die mit den anderen Stationen des Netzes durch spezielle Verbindungen verbunden ist, zu gruppieren.

18. Verfahren nach einem der vorangehenden Ansprüche, dadurch gekennzeichnet, dass es darin besteht, ebenfalls die Kommunikation zwischen zwei Netzen durch eine Telefonleitung des geschalteten Netzes zu erlauben.

19. Verfahren nach Anspruch 18, dadurch gekennzeichnet, dass jede Person einer Station eines Netzes anrufen kann oder von einer Person angerufen werden kann, die sich ausserhalb des Netzes befindet und mit dieser Station durch eine Leitung des geschalteten Netzes verbunden ist, wobei die genannte Person ausserhalb des Netzes insbesondere mit einer Sendevorrichtung ausgerüstet ist, die einen Abzeichenleser besitzt, der direkt mit der Sendekapsel des Hörers eines klassischen Telefonapparats verbunden ist.

20. Verfahren nach Anspruch 19, dadurch gekennzeichnet, dass es darin besteht, jedem Kommunikationsnetz einen spezifischen Kode zuzuordnen, wobei jede Person, die diesem Netz fremd ist, gegebenenfalls mit diesem Netz in Verbindung treten kann, indem sie ein Abzeichen besitzt, das wenigstens eine kodierte mit dem Kode des Netzes vereinbare Information enthält.

21. Verfahren nach einem der vorangehenden Ansprüche, dadurch gekennzeichnet, dass die Gesamtheit der Stationen, die ein Kommunikationsnetz bilden, in jeder Station durch eine synoptische Tafel materialisiert ist, die schematisch die geographischen Grenzen des Netzes darstellt und den Ort der verschiedenen Stationen dieses Netzes aufzeigt, wobei der Ort z.B. durch zwei Elektrolumineszenzdioden verschiedener Farbe, die mit Unterbrechung oder dauernd je nach dem Zustand jeder Station während der Konferenz aufleuchten, materialisiert wird, so dass auf diese Weise jede Person einer Station schnell und sofort von den von einer Konferenz betroffenen Stationen, dem Zustand jeder Station bei der Konferenz und der eventuellen Interventionsnachfragen von Stationen, die Teil des Netzes sind und bitten in die Konferenz einzutreten, Kenntnis nehmen kann.

22. Verfahren nach einem der vorangehenden Ansprüche, dadurch gekennzeichnet, dass eine nicht in einer Station des Netzes sich befindende Person dank einer tragbaren Sendeeinheit sich an eine Station des Netzes durch eine Telefonleitung des geschalteten Netzes anschliessen kann, um an einer Konferenz, die gegebenenfalls auf ihre Veranlassung zwischen mehreren Stationen des Netzes erstellt worden ist, teilzunehmen.

23. Einrichtung zur Erstellung von Zwei- und/oder Mehrwegekommunikationen, z.B. Telefonverbindungen, und/oder zum Austausch von Informationen z.B. in Form von Daten oder Telefonmitteilungen gemäss dem Verfahren wie es durch wenigstens einen der vorangehenden Ansprüche definiert worden ist, dadurch gekennzeichnet, dass es einen insbesondere klassischen Telefonapparat mit wenigstens einem alpha-numerischen Tastenfeld, eine Anzeigeeinheit und einen Satz von Verarbeitungsschaltungen, der insbesondere von einem Mikroprozessor mit einer zentralen Einheit gebildet wird eine Speichervorrichtung, in der die personalisierten, ein Repertoire bildenden Informationen eingespeichert sind, einen programmierbaren Lesespeicher mit wenigstens einen ein gespeicherten Programm zur Ausführung der verschiedenen automatischen Abläufe zur Suche und zur Aussendung eines Telefonanrufes, und ein Stossstellenetz zwischen dem Mikroprozessor, dem alpha-numerischen Tastenfeld und der Anzeigeeinheit, sowie einen Schaltkreis, der mit dem Telefonapparat und der Telefonlinie verbunden ist, besitzt, und dass sie ferner eine zweite Speichereinheit zur Speicherung der genannten personalisierten Information eines in dem genannten Repertoire aufgefundenen Partners besitzt, dessen Anruffolge jedoch durch ein Besetzsignal der Linie beantwortet ist, um von neuem und automatisch nach einer bestimmten Wartezeit wenigstens einen Versuch durchzuführen, diesen Partner zu erreichen.

24. Einrichtung nach Anspruch 23, dadurch gekennzeichnet, dass die zweite Speichereinheit einen Speicher geringer Kapazität besitzt, der geeignet ist zur Einspeicherung einer geringen Anzahl von personalisierten Informationen, und dass die Verarbeitungsschaltungen geeignet sind, in aufeinanderfolgender Weise automatische Anrufe von Abonnenten, die einer personalisierten Information zugeordnet sind, zu gewährleisten.

25. Einrichtung nach Anspruch 24, dadurch gekennzeichnet, dass die Anzeigeeinheit so geartet ist, dass sie die gleichzeitige Anzeige aller personalisierten Informationen, die in der zweiten Speichereinheit enthalten sind und in vorteilhafter Weise eine Anzeigemarke der personalisierten Information, die Gegenstand eines automatischen Anrufs ist, deren Anrufsfolge sich jedoch durch ein Besetzsignal der Linie übersetzt, besitzt, um von neuem und automatisch nach einer Wartezeit wenigstens einen Versuch zu unternehmen, diesen Partner zu erreichen.

26. Einrichtung nach Anspruch 24 oder 25, dadurch gekennzeichnet, dass sie eine dritte Speichereinheit besitzt, um eine personalisierte Information eines neuen Korrespondenten oder Partners einzuspeichern, bevor gegebenenfalls diese Information in das genannte Repertoire überführt wird, je nach dem Interesse an diesem Korrespondenten, wenn dieser erreicht worden ist.

27. Vorrichtung nach Anspruch 25 oder 26, dadurch gekennzeichnet, dass die zweite Speichereinheit und die dritte Speichereinheit von ein und demselben Speicher gebildet werden.

28. Einrichtung nach einem der Ansprüche 24 bis 27, dadurch gekennzeichnet, dass sie ein numerisches Tastenfeld besitzt, um die Telefonnummern der Korrespondenten in das genannte Repertoire einzuschreiben.

29. Einrichtung nach einem der Ansprüche 24 bis 28, dadurch gekennzeichnet, dass sie einen Sicherheitsschlüssel besitzt, um die Einrichtung in Empfangszustand lediglich dann zu bringen, wenn das genannte Repertoire im Begriff ist, sich zu bilden.

30. Einrichtung nach Anspruch 24, dadurch gekennzeichnet, dass eine genannte Station eine Taktvorrichtung besitzt, die mit dem Mikroprozessor verbunden ist, und dass letzterer so ausgeführt ist, um nach einem von der Taktvorrichtung zu einer vorher in ihm eingespeicherten Zeit einen automatischen Anruf eines Korrespondenten auszulösen, dessen personalisierte Information vorher in einen zweiten Speicher geringerer Kapazität eingebracht worden ist.

31. Einrichtung zur Erstellung von Zwei- und/oder Mehrwegekommunikationen z.B. Telefonverbindungen und/oder zum Austausch von Information z.B. in Form von Daten oder Telefonnachrichten, zwischen verschiedenen Personen, die an verschiedenen geographisch voneinander entfernten Orten gruppiert und miteinander durch Telefonleitungen verbunden sind, wobei jede Station eines Netzes eine Ausrüstung besitzt, die wenigstens eine mit einem Mikrophon versehene Sendeeinheit, eine mit einem Lautsprecher versehene Empfangseinheit und eine Anzeigeeinheit mit Elektroluminiszenzdioden besitzt, dadurch gekennzeichnet, dass jede Station auch eine Einheit, die einen Leser eines Trägers einer individuellen Information, wie eines Abzeichens, auf dem der Name der dieses Abzeichen besitzenden Person eingeschrieben ist, um den Namen dieser Person auf der Anzeigeeinheit jeder in die Konferenz eingetretenen Station, wenn diese interveniert, zu schreiben, und eine Stossstelleneinheit besitzt, die diese verschiedenen Einheiten mit der Telefonleitung verbindet, wobei diese Ausrüstung in jeder Station eines Kommunikationsnetzes mit mehreren untereinander durch Telefonleitungen und insbesondere durch spezielle Verbindungen miteinander verbundenen Stationen vorhanden ist.

32. Einrichtung nach Anspruch 31, dadurch gekennzeichnet, dass die genannte Ausrüstung, die in einer Station eines Netzes vorhanden ist, auch eine synoptische Tafel besitzt, die schematisch die geographischen Grenzen eines mehrere Stationen enthaltenen Netzes darstellt und den Ort der verschiedenen Stationen dieses Netzes angibt, wobei jede Station durch Mittel materialisiert ist, die in der Lage sind, Licht auszusenden, wie Elektrolumineszenzdioden, deren Leuchtzustand zu jedem Zeitpunkt über den Zustand dieser Station während einer Konferenz unterrichtet, wobei diese Mittel automatisch und/oder von Hand gemäss der Entwicklung der Konferenz gesteuert werden.

33. Einrichtung nach Anspruch 31 oder 32, dadurch gekennzeichnet, dass die genannte Ausrüstung einer Einheit auch eine Anzeigetafel mit mehreren Spalten enthalten kann, um sichtbar zu machen:

– den Namen jeder Station, die eingeladen worden ist, in eine Konferenz einzutreten, den Namen der Person oder der Personen, dieser Stationen, die zur Teilnahme an dieser Konferenz eingeladen worden sind,

– eine Information, die angibt, dass die angerufene Station die Einladung zum Eintritt in die Konferenz beantwortet hat, und

– eine Information z.B. numerischer oder digitaler Form, um die Nummer in der Warteliste einer Interventionsbitte, die von einer Person ihrer Station ausgeht, anzuzeigen.

34. Einrichtung nach einem der Ansprüche 31 bis 33, dadurch gekennzeichnet, dass sie Detektormittel eines vorbestimmten Schlüsselwortes besitzt, das von einem Sprecher ausgesprochen wird, und dass sie lediglich das Gültigwerden des Mikrophons dieses Sprechers befiehlt, wobei die anderen Mikrophone geschlossen gehalten werden, und das Mikrophon des Sprechers vorteilhafterweise bei der Detektion eines zweiten Schlüsselwortes geschlossen wird.

35. Einrichtung nach einem der Ansprüche 23 bis 34, dadurch gekennzeichnet, dass eine nicht in einer Station eines Kommunikationsnetzes anwesende Person eine spezielle Ausrüstung besitzt, die geeignet ist, durch eine Telefonleitung des geschalteten Netzes mit einer Station dieses Netzes verbunden werden zu können, wobei die genannte Ausrüstung von wenigstens einer Sendeeinheit, eine Empfangseinheit, einem Abzeichenleser und einem Stossstellenkreis gebildet wird, an den sich der Hörer eines z.B. klassischen Telefonapparates anschliesst.

FIG.1

Fig. 2

Fig. 3

25

Fig 5

Fig 4